# EUROPÄISCHE PATENTSCHRIFT

(11) **EP 2 382 402 B1**
(45) Veröffentlichungstag und Bekanntmachung des Hinweises auf die Patenterteilung: **25.03.2015**
(21) Anmeldenummer: 09796314.4
(22) Anmeldetag: 16.12.2009
(51) Int. Cl.: F16H 61/02, F16H 61/688, F16H 63/34, F16H 57/04, F16H 61/00

(54) **HYDRAULISCHE STEUERUNG FÜR EIN AUTOMATISIERTES GETRIEBE**
HYDRAULIC CONTROL FOR AN AUTOMATIC TRANSMISSION
CONTRÔLE HYDRAULIQUE POUR UNE TRANSMISSION AUTOMATIQUE

(30) Priorität: 23.01.2009 DE 102009005753
(43) Veröffentlichungstag der Anmeldung: 02.11.2011
(73) Patentinhaber: Daimler AG, 70327 Stuttgart (DE)
(72) Erfinder: BRANDENBURG, Markus, 73730 Esslingen (DE); KEMMNER, Benjamin, 72669 Unterensingen (DE); SCHINDLER, Jörg, 74321 Bietigheim-Bissingen (DE)
(74) Vertreter: JENSEN & SON
(86) Internationale Anmeldenummer: PCT/EP2009/009041
(87) Internationale Veröffentlichungsnummer: WO 2010/083862

(56) Entgegenhaltungen:
- EP-A2- 1 420 185
- EP-A2- 1 420 186
- DE-A1- 10 143 833
- DE-A1-102004 031 021

## Beschreibung

Die Erfindung betrifft eine hydraulische Steuerung für ein automatisiertes Getriebe insbesondere ein Doppelkupplungsgetriebe eines Kraftfahrzeugs mit den Merkmalen des Oberbegriffs des Anspruchs 1.

Die DE 10 2006 006 181 A1 beschreibt eine hydraulische Steuerung für ein automatisiertes Getriebe eines Kraftfahrzeugs. Die hydraulische Steuerung weist ein Schmier-Kühlsystem auf, mittels welchem eine als nasslaufende Lamellenkupplung ausgeführte Anfahrkupplung gekühlt werden kann. Die hydraulische Steuerung weist einen Schmierdruckschieber auf, mittels welchem die Höhe eines Schmierdrucks im Schmier-Kühlsystem einstellbar ist. Der Schmierdruck wird dabei in Abhängigkeit eines im Antriebsstrang fließenden Drehmoments eingestellt. Die hydraulische Steuerung weist dazu ein ansteuerbares Drucksteuerventil auf, das einen Schmier-Steuerdruck in Form eines Vorsteuerdrucks am Schmierdruckschieber einstellt.

Die EP 1 420 185 A2 beschreibt eine hydraulische Steuerung für ein automatisiertes Getriebe eines Kraftfahrzeugs. Die hydraulische Steuerung weist zwei Pumpen auf, wobei eine erste Pumpe ausschließlich in ein Schmier-Kühlsystem fördert. Ein ansteuerbares Ventil kann einen Steuerdruck auf ein Volumenstromregelventil des Schmier-Kühlsystems aufbringen, wodurch der Volumenstrom im Schmier-Kühlsystem eingestellt bzw. verringert werden kann. Als Eingangsdruck des ansteuerbaren Ventils dient ein von der zweiten Pumpe erzeugter Systemdruck.

Demgegenüber ist des die Aufgabe der Erfindung, eine hydraulische Steuerung für ein automatisiertes Getriebe vorzuschlagen, bei welcher die Einstellung eines Schmierdrucks des Schmier-Kühlsystems einfach und kostengünstig möglich ist. Erfindungsgemäß wird die Aufgabe durch eine hydraulische Steuerung mit den Merkmalen des Anspruchs 1 gelöst.

Erfindungsgemäß weist die hydraulische Steuerung eine Hauptpumpe und eine steuerbare Zusatzpumpe auf, welche gemeinsam eine Ölversorgung der hydraulischen Steuerung sicherstellen. Die Hauptpumpe ist insbesondere mechanisch mit einer Antriebsmaschine beispielsweise einem Verbrennungsmotor des Kraftfahrzeugs gekoppelt und wird von diesem angetrieben. Die Fördermenge der Hauptpumpe ist in diesem Fall von der Drehzahl der Antriebsmaschine abhängig. Die Zusatzpumpe wird insbesondere von einem von einer elektronischen Steuerungseinrichtung angesteuerten Elektromotor angetrieben, womit die Fördermenge der Zusatzpumpe durch Änderung der Drehzahl des Elektromotors einstellbar und insbesondere auch auf Null reduzierbar ist. Die Zusatzpumpe kann damit die Hauptpumpe bei der Versorgung der hydraulischen Steuerung unterstützen und insbesondere auch bei stehender Antriebsmaschine die hydraulische Steuerung mit Öl versorgen. Damit wird ein so genannter Start-Stop-Betrieb des Kraftfahrzeugs ermöglicht, bei dem in Situationen, in denen keine Leistung der Antriebsmaschine benötigt wird, diese automatisiert gestoppt und anschließend auch wieder gestartet wird.

Die Zusatzpumpe kann in einen Steuerkanal des Schmierdruckschiebers fördern und so einen Schmier-Steuerdruck aufbauen. Durch Änderung des Schmier-Steuerdrucks ändert sich auch der vom Schmierdruckschieber eingestellte Schmierdruck im Schmier-Kühlsystem. Damit kann auch einfache und kostengünstige Weise der Schmier-Steuerdruck verändert und so der Schmierdruck eingestellt werden.

Das automatisierte Getriebe ist insbesondere als ein Doppelkupplungsgetriebe ausgeführt. Es kann aber beispielsweise auch als ein automatisiertes Schaltgetriebe, ein Automatikgetriebe mit Planetensätzen oder ein stufenloses Getriebe ausgeführt sein.

Der Schmierdruckschieber ist so ausgeführt, dass der eingestellte Schmierdruck mit steigendem Schmier-Steuerdruck ansteigt, wobei eine untere Grenze des Schmierdrucks durch eine Feder festgelegt wird. Damit wird der Schmierdruck und auch die zur Verfügung stehende Schmierölmenge dann erhöht, wenn die Zusatzpumpe Öl fördert und so den Schmier-Steuerdruck erhöht. Da die Zusatzpumpe insbesondere dann zugeschaltet wird, wenn ein erhöhter Kühl- und Schmierbedarf herrscht, wird in diesen Situationen auch der Schmierdruck erhöht.

In Ausgestaltung der Erfindung weist das Schmier-Kühlsystem einen ersten, ansteuerbaren Kühlungsschieber auf, mittels welchem eine Verbindung zwischen dem Steuerkanal des Schmierdruckschiebers und der Zusatzpumpe hergestellt und getrennt werden kann. Damit kann die Zusatzpumpe auch aktiviert werden, ohne dass es zwingend eine Auswirkung auf den Schmierdruckschieber und damit auf den Schmierdruck gibt. Die Zusatzpumpe kann also insbesondere auch Öl fördern, ohne dass der Schmierdruck erhöht wird. Dies ist insbesondere bei der Versorgung der hydraulischen Steuerung in Stop-Phasen eines Start-Stop-Betriebs notwendig. In einer solchen Stop-Phase, also bei stehender Antriebsmaschine ist es nicht notwendig, dass der Schmierdruck erhöht wird. Dies würde nur zu einem erhöhten Ölbedarf führen, der auch noch von der Zusatzpumpe abgedeckt werden müsste.

In Ausgestaltung der Erfindung wird das Schmier-Kühlsystem über einen Zuführkanal mit einem Ölvolumenstrom von der Hauptpumpe versorgt. Es weist zusätzlich einen Zusatzölkanal auf, über welchen ein zusätzlicher Ölvolumenstrom von der Zusatzpumpe in das Schmier-Kühlsystem fließen kann. Der Steuerkanal des Schmierdruckschiebers entspricht dabei zumindest teilweise dem Zusatzölkanal. Damit kann für den Steuerkanal und den Zusatzölkanal zumindest teilweise ein einziger Kanal verwendet werden, was eine einfache Kanalführung in der hydraulischen Steuerung ermöglicht. Im Zusatzölkanal ist insbesondere ein Rückschlagventil so angeordnet, dass Öl nur von der Zusatzpumpe in das Schmier-Kühlsystem und nicht umgekehrt fließen kann.

In Ausgestaltung der Erfindung kann mit dem ersten, ansteuerbaren Kühlungsschieber ein zweiter Kühlkanal, der parallel zum ersten Kühlkanal angeordnet ist, geöffnet und geschlossen werden. Damit kann im Falle hoher Verlustleistung an der Anfahrkupplung durch Öffnen des zweiten Kühlkanals eine sehr große Kühlölmenge zur Anfahrkupplung geleitet werden. Ist der Kühlölbedarf nicht so groß, so kann der zweite Kühlkanal geschlossen werden und es wird nicht unnötig Kühlöl zur Anfahrkupplung geleitet.

Neben einer offenen und einer geschlossenen Stellung des zweiten Kühlkanals ist auch die Einstellung einer Zwischenstellung denkbar, wobei geöffnet nicht unbedingt vollständig geöffnet und geschlossen nicht unbedingt vollständig geschlossen bedeuten muss. Der Kühlungsschieber kann beispielsweise von einem Magnetventil angesteuert werden, welches als ein Schaltventil oder ein Regelmagnetventil ausgeführt sein kann.

In Ausgestaltung der Erfindung kann mittels des ersten Kühlungsschiebers ein Rückführkanal, über welchen ein Ölvolumenstrom vom Schmier-Kühlsystem zu einer Ansaugseite einer Pumpe der hydraulischen Steuerung fließen kann, geöffnet und geschlossen werden. Die Pumpe versorgt die hydraulische Steuerung mit Öl, wobei die hydraulische Steuerung auch mehr als eine Pumpe aufweisen kann. Die Pumpe saugt das Öl insbesondere über einen Saugfilter aus einem Tank an. Über den Rückführkanal kann Öl, das im Schmier-Kühlsystem nicht benötigt wird, direkt zur Pumpe rückgeführt werden. Dies ist energetisch günstiger als das überschüssige Öl in den Tank zu leiten, aus dem sich die Pumpe es sich dann wieder ansaugen müsste. Der erste Kühlungsschieber ist insbesondere so ausgeführt, dass bei einem Öffnen des zweiten Kühlkanals der Rückführkanal geschlossen und bei einem Öffnen des Rückführkanals der zweite Kühlkanal geschlossen wird.

In Ausgestaltung der Erfindung kann mittels des ersten Kühlungsschiebers der Zusatzölkanal, über welchen ein zusätzlicher Ölvolumenstrom in das Schmier-Kühlsystem fließen kann, geöffnet und geschlossen werden. Damit wird kann eine besonders hohe Ölmenge in das Schmier-Kühlsystem gefördert werden, wobei für das Öffnen und Schließen des Zusatzölkanals kein weiteres Bauteil erforderlich ist.

In Ausgestaltung der Erfindung mündet der Zusatzölkanal in den ersten oder zweiten Kühlölkanal zur Kühlung der Anfahrkupplung. Damit kann der zusätzliche Ölvolumenstrom direkt zur Anfahrkupplung geleitet werden und die Anfahrkupplung so mit einer besonders hohen Ölvolumenstrom zur Kühlung versorgt werden, so dass eine Überhitzung der Anfahrkupplung sicher verhindert werden kann.

In Ausgestaltung der Erfindung weist das Schmier-Kühlsystem einen zweiten, ansteuerbaren Kühlungsschieber auf, mittels welchem ein Ölvolumenstrom im ersten Kühlkanal einstellbar ist. Die Ansteuerung erfolgt insbesondere über einen Steuerdruck, der beispielsweise von einem Elektromagnetventil eingestellt wird. Der zweite Kühlungsschieber ist insbesondere so ausgeführt, dass der für die Kühlung und Schmierung zur Verfügung stehende Ölvolumenstrom aufgeteilt werden kann in einen Teilvolumenstrom in den ersten Kühlkanal zur Anfahrkupplung und in weitere Teilvolumenströme beispielsweise zum Radsatz des Getriebes und/oder zur elektronischen Steuerung.

In Ausgestaltung der Erfindung wird der zweite Kühlungsschieber von einem zweiten ansteuerbaren Ventil insbesondere einem Magnetventil mit einem zweiten Kühl-Steuerdruck angesteuert, welches eine von der Einstellung des zweiten Kühl-Steuerdrucks abweichende Hauptfunktion innerhalb der hydraulischen Steuerung aufweist. Der erste Kühlungsschieber wird insbesondere von einem ersten ansteuerbaren Ventil insbesondere einem Magnetventil mit einem ersten Kühl-Steuerdruck angesteuert, welches eine von der Einstellung des ersten Kühl-Steuerdrucks abweichende Hauptfunktion innerhalb der hydraulischen Steuerung aufweist. Damit können ansteuerbare Ventile insbesondere Magnetventile eingespart werden, was eine kostengünstige hydraulische Steuerung ermöglicht. Die genannten ansteuerbaren Ventile haben insbesondere die Hauptaufgabe, eine von mehreren Schalteinrichtungen des Getriebes auszuwählen, die bei einer Schaltung mit einem Betätigungsdruck beaufschlagt werden soll. Die Mehrfachnutzung der ansteuerbaren Ventile kann beispielsweise durch die Nutzung unterschiedlicher Druckniveaus für die unterschiedlichen Aufgaben ermöglicht werden.

In Ausgestaltung der Erfindung weist die hydraulische Steuerung ein Gangbetätigungssystem mit einem ersten und einem zweiten Gangschieber auf, welche jeweils einer ersten und einer zweiten Schalteinrichtung eines ersten Teilgetriebes zugeordnet sind. Mittels der Gangschieber kann ein Betätigungsdruck auf die jeweils zugeordnete Schalteinrichtung aufgebracht werden. Dazu muss der zugehörige Gangschieber mittels eines Gang-Steuerdrucks in eine entsprechende Stellung gebracht werden und so eine Schalteinrichtung ausgewählt werden. Mittels eines ersten und eines zweiten ansteuerbaren Gang-Ventils insbesondere in Form von Magnetventilen, welche jeweils dem ersten und zweiten Gangschieber zugeordnet sind, kann ein erster bzw. ein zweiter Gang-Steuerdruck am ersten bzw. zweiten Gangschieber eingestellt werden. Der zweite Gang-Steuerdruck des zweiten Gangschiebers wirkt dabei am ersten Gangschieber dem ersten Gang-Steuerdruck entgegen, womit der erste Gangschieber durch den zweiten Steuerdruck verriegelbar ist.

Damit ist gewährleistet, dass sobald die zweite Schalteinrichtung mittels einer entsprechenden Einstellung des zweiten Gang-Steuerdrucks ausgewählt ist, die erste Schalteinrichtung nicht mehr ausgewählt werden kann. So wird auf einfache Weise verhindert, dass nach Auswahl der zweiten Schalteinrichtung anschließend die erste Schalteinrichtung auch noch ausgewählt wird und so gleichzeitig zwei Gänge des ersten Teilgetriebes eingelegt werden. Das Gangbetätigungssystem ist insbesondere so ausgeführt, dass auf entsprechende Weise der zweite Gangschieber durch den ersten Steuerdruck verriegelbar ist. In dem Fall, dass das Zahnräderwechselgetriebe als ein Doppelkupplungsgetriebe ausgeführt ist, weisen die Schalteinrichtungen eines dann vorhandenen zweiten Teilgetriebes entsprechende Verriegelungen auf.

Damit wird auf einfache Weise eine sichere Verriegelung der Gänge eines Teilgetriebes erreicht. Außerdem können mittels der Gang-Steuerdrücke auch weitere Funktionen innerhalb der Steuerungseinrichtung realisiert werden. Beispielsweise kann nachdem die zweite Schalteinrichtung mittels des zweiten Gang-Steuerdrucks ausgewählt wurde, der erste Gang-Steuerdruck erhöht werden, ohne dass damit zusätzlich zur zweiten Schalteinrichtung auch noch die erste Schalteinrichtung ausgewählt werden würde. Damit kann in diesem Zustand mittels des ersten Gang-Steuerdrucks beispielsweise das Verhalten eines Schmier-Kühlsystems beeinflusst werden.

Das Gangbetätigungssystem ist insbesondere so ausgeführt, dass die zweite Schalteinrichtung dann ausgewählt wird, wenn der zweite Gang-Steuerdruck eine erste Druckschwelle überschreitet. Der zweite Gang-Steuerdruck wirkt insbesondere gegen eine Feder, so dass sich die jeweilige Druckgrenze durch die Eigenschaften der Feder ergibt. Bei Überschreiten einer zweiten Druckschwelle durch den zweiten Gang-Steuerdruck ist eine Auswahl der ersten Schalteinrichtung und damit eine Einstellung eines Betätigungsdrucks an der ersten Schalteinrichtung mittels des ersten Gang-Steuerdrucks nicht mehr möglich. Die zweite Druckschwelle kann gleich groß oder kleiner als die erste Druckschwelle sein. Damit wird eine sichere Verriegelung der ersten Schalteinrichtung ermöglicht.

Der erste Gang-Steuerdruck wirkt insbesondere gegen eine Feder. Damit wirkt dem ersten Gang-Steuerdruck nicht nur der zweite Gang-Steuerdruck, sondern auch die Federkraft entgegen. Damit ist eine geringere Höhe des zweiten Gang-Steuerdrucks ausreichend, um eine Auswahl der ersten Schalteinrichtung zu verhindern.

In Ausgestaltung der Erfindung ist der erste Gangschieber des Gangbetätigungssystems so ausgeführt, dass eine erste Wirkfläche des ersten Gang-Steuerdrucks kleiner ist als eine zweite Wirkfläche des zweiten Gang-Steuerdrucks. Damit ist ebenfalls eine geringere Höhe des zweiten Gang-Steuerdrucks ausreichend, um eine Auswahl der ersten Schalteinrichtung zu verhindern.

Die genannte Feder und/oder das Flächenverhältnis der ersten und zweiten Wirkflächen sind insbesondere so ausgelegt, dass bei Einstellung des zur Auswahl der zweiten Schalteinrichtung notwendigen minimalen Drucks als zweiter Gang-Steuerdruck der maximal einstellbare erste Gang-Steuerdruck nicht ausreicht, um zusätzlich die erste Schalteinrichtung auszuwählen.

In Ausgestaltung der Erfindung weist das Gangbetätigungssystem eine Rastiervorrichtung auf, welche eine Stellung der Schalteinrichtungen bei nicht vorhandenem Betätigungsdruck arretiert. Damit ist zur Beibehaltung einer eingestellten Stellung der Schalteinrichtungen kein Betätigungsdruck notwendig. Damit werden zum einen unkontrollierbare Veränderungen der Stellungen der nicht ausgewählten Schalteinrichtungen verhindert und zum anderen muss zum Halten der Stellung der ausgewählten Schalteinrichtung kein Druck aufgebracht werden, was den Wirkungsgrad der Steuerungseinrichtung verschlechtern würde. Der jeweilige Gang-Steuerdruck der ausgewählten Schalteinrichtung bleibt aber unverändert, um so die beschriebene Verriegelung zu gewährleisten. Die Rastiervorrichtung kann beispielsweise direkt am Gangschieber oder auch an einer Schaltgabel angeordnet sein.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine schematische Darstellung eines Doppelkupplungsgetriebes eines Kraftfahrzeugs,
- Fig. 2: einen Schaltplan einer als hydraulische Steuerung ausgeführten Steuerungseinrichtung eines Doppelkupplungsgetriebes,
- Fig. 3: eine Rastiervorrichtung einer Schalteinrichtung eine Doppelkupplungsgetriebes,
- Fig. 4: Kennlinien eines Versorgungsdruckschiebers der hydraulischen Steuerung und
- Fig. 5: Druckverläufe bei einer Funktionsüberprüfung eines Notschiebers der hydraulischen Steuerung.

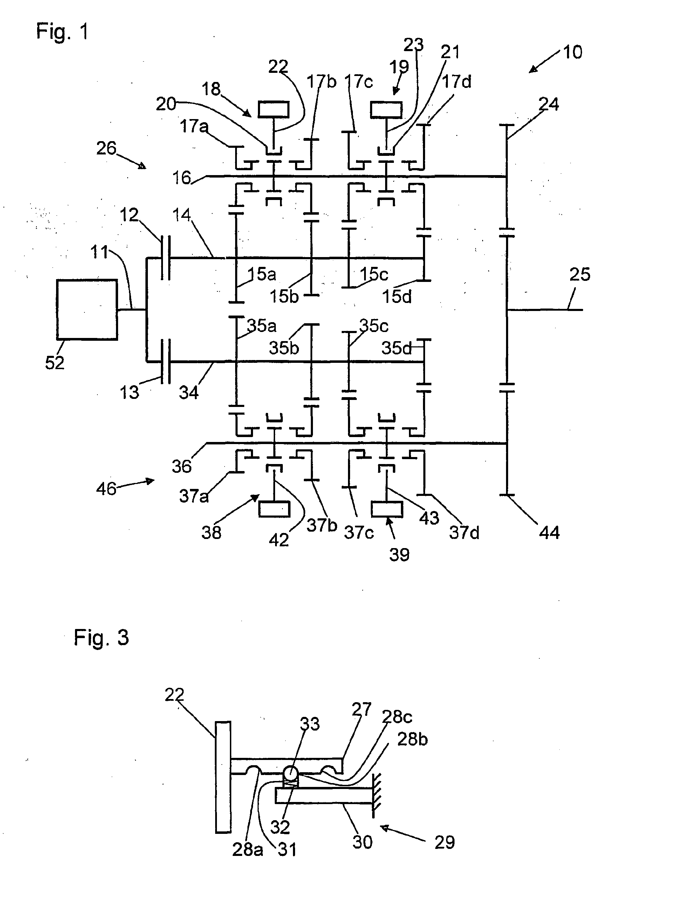

Gemäß Fig. 1 ist ein automatisiertes Getriebe in Form eines Doppelkupplungsgetriebes 10 für ein Kraftfahrzeug mit 7 Vorwärts- und einem Rückwärtsgang über eine Antriebswelle 11 mit einer Antriebsmaschine 52 beispielsweise in Form eines Verbrennungsmotors verbunden. Die Antriebswelle 11 steht mit einer ersten und einer zweiten Kupplung 12, 13 in Wirkverbindung. Die Kupplungen 12, 13 dienen als Anfahrkupplungen und sind insbesondere als nasse Reibungskupplungen ausgeführt, die hydraulisch betätigbar sind. Die Kupplung 12 steht außerdem mit einer ersten Getriebeeingangswelle 14 in Wirkverbindung, auf der vier Festräder 15a bis 15d angeordnet sind. Parallel zur ersten Getriebeeingangswelle 14 ist eine erste Vorgelegewelle 16 angeordnet, auf der vier Losräder 17a bis 17d drehbar gelagert sind, die jeweils mit den Festrädern 15a bis 15d der ersten Getriebeeingangswelle 14 kämmen. Die Losräder 17a, 17b können mittels einer ersten Schalteinrichtung 18 und die Losräder 17c, 17d mittels einer zweiten Schalteinrichtung 19 mit der Vorgelegewelle 16 drehfest gekoppelt werden. Die Schalteinrichtungen 18, 19 weisen dazu Schiebemuffen 20, 21 auf, durch deren Verschiebung in axialer Richtung der Vorgelegewelle 16 die Kopplungen zwischen den Losrädern 17a bis 17d mit der Vorgelegewelle 16 auf bekannte Weise hergestellt und getrennt werden können. Die Schiebemuffen 20, 21 können dazu von Schaltgabeln 22, 23 verschoben werden. Damit können vier Gänge des Doppelkupplungsgetriebes 10 gebildet bzw. ein- und ausgelegt werden. Über ein erstes Ausgangszahnrad 24 ist die erste Vorgelegewelle 16 mit einer Ausgangswelle 25 des Doppelkupplungsgetriebes 10 verbunden.

Die erste Getriebeeingangswelle 14, die Festräder 15a bis 15d, die Vorgelegewelle 16, die Losräder 17a bis 17d und das erste Ausgangszahnrad 24 bilden damit ein erstes Teilgetriebe 26 des Doppelkupplungsgetriebes 10.

Auf dieselbe Weise bilden eine zweite Getriebeeingangswelle 34, Festräder 35a bis 35d, eine Vorgelegewelle 36, Losräder 37a bis 37d und ein zweites Ausgangszahnrad 44 ein zweites Teilgetriebe 46 des Doppelkupplungsgetriebes 10, das mit der zweiten Kupplung 13 verbunden ist. Die damit gebildeten vier Gänge können über eine dritte und eine vierte Schalteinrichtung 38, 39 und zugehörige Schaltgabeln 42, 43 ein- und ausgelegt werden.

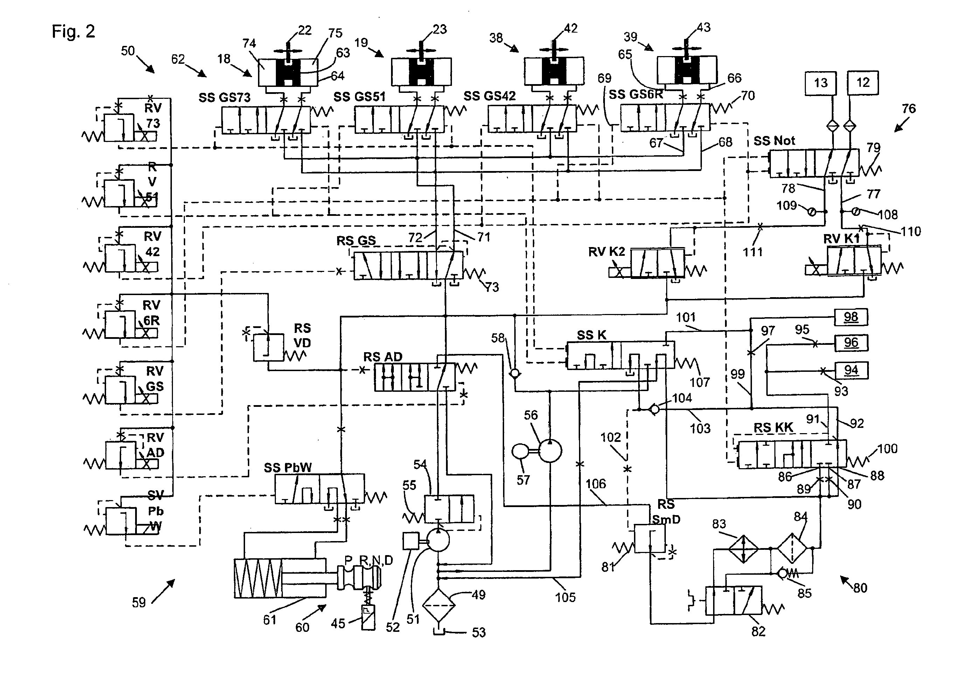

Die Kupplungen 12, 13 und die Schalteinrichtungen 18, 19, 38, 39 werden von einer als hydraulische Steuerung ausgeführten Steuerungseinrichtung angesteuert, deren Schaltplan in Fig. 2 dargestellt ist.

Gemäß Fig. 2 weist die hydraulische Steuerung 50 eine Hauptpumpe 51 auf, die von der Antriebsmaschine 52 des Kraftfahrzeugs angetrieben wird. Die Hauptpumpe 51 saugt dazu Öl über einen Saugfilter 49 aus einem Tank 53 an. Das Tank-Symbol wird an vielen Stellen des Schaltplans verwendet. Das Tank-Symbol ist dann immer so zu verstehen, dass die zugehörige Leitung zum Tank führt.

Ausgangsseitig der Hauptpumpe 51 ist ein Trennventil 54 angeordnet. Solange die Hauptpumpe 51 noch keinen ausreichenden Druck von ca. 1 - 1,5 bar aufgebaut hat, trennt das Trennventil 54 die Hauptpumpe 51 vom restlichen Hydrauliksystem. Dazu wird der Pumpendruck als Trenn-Steuerdruck genutzt, der gegen eine Feder 55 wirkt. Erst wenn der Pumpendruck groß genug ist, um die Federkraft zu überwinden, wird das Trennventil 54 aus der dargestellten Stellung verschoben und die Verbindung zwischen Hauptpumpe 51 und dem restlichen Hydrauliksystem hergestellt. Das Trennventil 54 dient zum einen dazu, einen Ölfluss in Richtung Hauptpumpe 51 zu verhindern und zum anderen dazu, ein notwendiges Anlaufverhalten der Hauptpumpe 51 zu gewährleisten. Nach dem Trennventil 54 ist ein Arbeitsdruckschieber RS AD angeordnet, mittels welchem ein Arbeitsdruck im Hydrauliksystem eingestellt werden kann. Der Arbeitsdruckschieber RS AD ist in Form eines 4/3-Ventils, also eines Ventils mit 4 Anschlüssen und 3 Stellungen ausgeführt. Über einen ersten Anschluss ist der Arbeitsdruckschieber RS AD mit dem Trennventil 54 verbunden. Ein zweiter Anschluss ist mit der Saugseite der Hauptpumpe 51 verbunden. Über diesen Anschluss kann überschüssiges Öl direkt zur Hauptpumpe 51 zurückgeführt werden. Ein dritter Anschluss führt zu einem Hochdrucksystem, in dem der Arbeitsdruck herrscht, und ein vierter Anschluss zu einem Schmier-Kühlsystem 80.

Auf den Arbeitsdruckschieber RS AD wirkt zusammen mit einer Federkraft ein Arbeits-Steuerdruck gegen den zurückgeführten Arbeitsdruck. Der Arbeits-Steuerdruck wird von einem Regelmagnetventil RV AD eingestellt, das wie alle anderen Magnetventile von einer nicht dargestellten elektronischen Steuerung angesteuert wird. Durch Einstellung des Arbeits-Steuerdrucks kann ein gewünschter Arbeitsdruck zwischen ca. 3 und 25 bar eingestellt werden. Dazu nimmt der Arbeitsdruckschieber RS AD eine entsprechende Stellung ein.

In der dargestellten ersten Stellung des Arbeitsdruckschiebers RS AD fördert die Hauptpumpe 51 ausschließlich in das Hochdrucksystem, die beiden anderen Anschlüsse haben keine Verbindung. Diese Stellung nimmt der Arbeitsdruckschieber RS AD ein, wenn der angeforderte Arbeitsdruck größer ist als der zurückgeführte, tatsächliche Arbeitsdruck. Diese Stellung ergibt sich insbesondere dann, wenn die Hauptpumpe 51 keine ausreichend hohe Förderleistung bringt. Damit hat das Hochdrucksystem Vorrang vor dem Schmier-Kühlsystem 80. Ist der Arbeitsdruck ausreichend groß, so wird der Arbeitsdruckschieber RS AD in die zweite Stellung verschoben, in der die Hauptpumpe 51 sowohl in das Hochdrucksystem als auch in das Schmier-Kühlsystem 80 fördert. Ein Rückfluss zur Saugseite der Hauptpumpe 51 findet nicht statt. Ist der Arbeitsdruck zu groß, so wird der Arbeitsdruckschieber RS AD in die dritte Stellung verschoben, in der alle Anschlüsse miteinander verbunden sind und so zusätzlich auch ein Rückfluss zur Saugseite der Hauptpumpe 51 stattfinden kann. Durch schnelle Wechsel der verschiedenen Stellungen kann der angeforderte Arbeitsdruck eingeregelt werden.

Zusätzlich zur Hauptpumpe 51 weist die hydraulische Steuerung 50 eine Zusatzpumpe 56 auf, die von einem Elektromotor 57 angetrieben wird. Der Elektromotor 57 wird von der elektronischen Steuerung angesteuert. Der Betrieb der Zusatzpumpe 56 ist damit unabhängig vom Betriebszustand der Antriebsmaschine 52 des Kraftfahrzeugs. Die Zusatzpumpe 56 saugt ebenfalls über den Saugfilter 49 Öl an und fördert es über ein Rückschlagventil 58 in das Hochdrucksystem. Das Rückschlagventil 58 ist so angeordnet, dass ein Ölfluss in Richtung Zusatzpumpe 56 gesperrt ist. Über das Rückschlagventil 58 ist die Zusatzpumpe 56 mit dem dritten Anschluss des Arbeitsdruckschiebers RS AD und damit auch mit der Rückführung auf den Arbeitsdruckschieber RS AD verbunden. Das Trennventil 54 sorgt dafür, dass das von der Zusatzpumpe 56 geförderte Öl nicht in Richtung Hauptpumpe 51 abfließen kann. Außerdem kann die Zusatzpumpe 56 auch Öl in das Schmier-Kühlsystem 80 fördern.

Die Zusatzpumpe 56 kann also die Hauptpumpe 51 bei der Ölversorgung der hydraulischen Steuerung 50 unterstützen, damit kann die Hauptpumpe 51 kleiner ausgelegt werden. Die Zusatzpumpe 56 kann insbesondere auch dann die Ölversorgung sicherstellen, wenn die Antriebsmaschine 52 des Kraftfahrzeugs und damit auch die Hauptpumpe 51 stehen. Damit wird ein so genannter Start-Stopp-Betrieb des Kraftfahrzeugs ermöglicht.

Vom Arbeitsdruck wird über einen Versorgungsdruckschieber RS VD ein konstanter Versorgungsdruck von ca. 6,5 bar zur Versorgung der Magnetventile des Hydrauliksystems 50 abgeleitet und auf die Magnetventile geleitet.

Das Hydrauliksystem 50 weist ein Parksperren-Betätigungssystem 59 auf, mittels dem eine nur schematisch dargestellte Parksperre 60 ein- und ausgelegt werden kann. Mittels der Parksperre 60 kann auf bekannte Weise eine formschlüssige Verbindung zwischen einer Ausgangswelle und einem Gehäuse des Doppelkupplungsgetriebes hergestellt werden und so eine Bewegung des Kraftfahrzeugs verhindert werden. Das Parksperren-Betätigungssystem 59 weist einen Parksperrenschieber SS PbW in Form eines 5/2-Ventils auf. In der ersten, dargestellten Stellung ist eine erste Seite eines doppelt wirkenden Zylinders 61 der Parksperre 60 mit dem Arbeitsdruck verbunden. Damit wird bzw. ist die Parksperre 60 ausgelegt, was mit den zugehörigen Fahrstufen R, N, D angedeutet ist. In der zweiten Stellung des Parksperrenschiebers SS PbW ist die andere, zweite Seite des doppelt wirkenden Zylinders 61 mit dem Arbeitsdruck verbunden, so dass die Parksperre 60 eingelegt wird bzw. ist. Dies ist mit der zugehörigen Fahrstufe P angedeutet. Die Seite des doppelt wirkenden Zylinders 61, die nicht mit dem Arbeitsdruck verbunden ist, ist jeweils über den Parksperrenschieber SS PbW mit dem Tank verbunden. Zum Einstellen der beiden Stellungen des Parksperrenschiebers SS PbW wirkt ein Park-Steuerdruck auf den Parksperrenschieber SS PbW, der von einem Magnetschaltventil SV PbW eingestellt wird.

Die aktuelle Stellung der Parksperre kann mit einer Haltevorrichtung 45 arretiert werden. Die Haltevorrichtung 45 wird elektromagnetisch betätigt, wobei sie im nicht betätigten Zustand die aktuelle Stellung der Parksperre 60 arretiert. Die Parksperre 60 ist so ausgelegt, dass sie, sofern nicht die ausgelegte Stellung mittels der Haltevorrichtung 45 arretiert ist, in einem drucklosen Zustand des Parksperren-Betätigungssystem 59 eingelegt ist, also die Fahrstufe P aktiviert ist. Soll die Parksperre 60 ausgelegt werden, was beispielsweise durch den Fahrer mittels eines Wählhebels ausgelöst werden kann, so wird zunächst die Haltevorrichtung betätigt und so die Arretierung der Fahrstufe P aufgehoben. Anschließend kann die Parksperre durch das Parksperren-Betätigungssystem 59 ausgelegt werden. Nach dem Auslegen wird die Parksperre 60 in der ausgelegten Stellung mit der Haltevorrichtung 45 arretiert. Die Haltevorrichtung 45 wird von einer nicht dargestellten separaten Stromversorgung, beispielsweise einer Batterie mit elektrischer Energie versorgt, so dass eine Betätigung der Haltevorrichtung 45 auch bei nicht mehr funktionierender Bordspannungsversorgung noch betätigt und so ein Wechsel der Fahrstufe ermöglicht werden kann. Ist das Parksperren-Betätigungssystem 59 in diesem Moment drucklos, so wird wie oben beschrieben die Parksperre eingelegt und das Kraftfahrzeug kann nicht mehr bewegt werden. Damit kann die Parksperre 60 auch bei stehender Hauptpumpe 51 eingelegt werden.

Die Zusatzpumpe 56 und das Parksperren-Betätigungssystem 59 sind so ausgelegt, dass der von der Zusatzpumpe 56 geförderte Ölvolumenstrom ausreicht, um einen Druck im Hydrauliksystem 50 aufzubauen, der ausreicht, die Parksperre 60 auszulegen. Der dafür notwendige Druck liegt beispielsweise in einem Bereich zwischen 4 und 10 bar, wobei die Zusatzpumpe 56 beispielsweise einen Ölvolumenstrom zwischen von ca. 2 und 8 l/min liefern kann. Damit ist es möglich, die Parksperre 60 auch ohne Öl von der Hauptpumpe 51, beispielsweise bei einem Schaden an der Antriebsmaschine 52, zu betätigen und damit zu öffnen. Etwaige mechanische Lösungen, die in einem derartigen Fall ein Auslegen der Parksperre ermöglichen, sind damit nicht notwendig. Eine derartige Auslegung von Zusatzpumpe und Parksperren-Betätigungssystem ist unabhängig vom sonstigen Aufbau der hydraulischen Steuerung und kann auch anders aufgebauten hydraulischen Steuerungen und in Verbindung mit anderen Getriebesystemen, wie beispielsweise automatisierten Schaltgetrieben, Automatikgetrieben mit Planetensätzen oder stufenlosen Getrieben eingesetzt werden.

Das Hydrauliksystem 50 weist außerdem ein Gangbetätigungssystem 62 auf, mittels welchem die Schalteinrichtungen 18, 19, 38, 39 betätigt und so die verschiedenen Gänge des Doppelkupplungsgetriebes durch das beschriebene Verschieben der Schaltgabeln 22, 23, 42, 43 ein- und ausgelegt werden können. Die Schaltgabeln 22, 23, 42, 43 sind auch in der Fig. 2 dargestellt. Die Schalteinrichtungen 18, 19, 38, 39 sind nahezu identisch aufgebaut, so dass aus Gründen der Übersichtlichkeit stellvertretend für alle Schalteinrichtungen 18, 19, 38, 39 jeweils nur ein Bezugszeichen je Bauteil angegeben und in der Figur dargestellt ist.

Die Schaltgabeln 22, 23, 42, 43 stehen jeweils in Wirkverbindung mit Kolben 63, die innerhalb von Zylindern 64 verschieblich angeordnet sind. Die Kolben 63 und die Zylinder 64 bilden so einen linken Druckraum 74 und einen rechten Druckraum 75. Der linke Druckraum 74 ist mit einer linken Betätigungsdruckleitung 65, der rechte Druckraum 75 ist mit einer rechten Betätigungsdruckleitung 66 verbunden. Durch Zuführung von Öl in den linken oder rechten Druckraum 74, 75 können die Kolben 63 auf beiden Seiten mit einem Betätigungsdruck beaufschlagt werden, so dass sie durch Bewegung in eine erste und eine zweite Richtung in zwei äußere und eine jeweils dargestellte, mittlere Stellung gestellt werden können. In einer äußeren Stellung ist die der jeweiligen Schalteinrichtung zugeordnete Schiebemuffe mittels der zugehörigen Schaltgabel in eine geschaltete Position gebracht, so dass eines von den beiden, der jeweiligen Schalteinrichtung zugeordneten Losrädern mit einer Vorgelegewelle gekoppelt ist und so ein Gang geschaltet ist. In der mittleren Stellung der Kolben 63 ist die zugehörige Schiebemuffe ebenfalls in einer mittleren, neutralen Stellung, so dass von dieser Schiebemuffe kein Gang geschaltet ist. Die erste Schalteinrichtung 18 kann so entweder einen 3. oder einen 7. Gang, die zweite Schalteinrichtung 19 einen 1. oder 5. Gang, die dritte Schalteinrichtung 38 einen 2. oder 4. Gang und die vierte Schalteinrichtung 39 einen Rückwärtsgang oder einen 6. Gang schalten. Entsprechend Fig. 1 sind damit die Gänge 3, 7, 1 und 5 dem ersten Teilgetriebe 26 und die Gänge 2, 4, 6 und der Rückwärtsgang dem zweiten Teilgetriebe 46 zugeordnet. Die Schalteinrichtungen 18, 19, 38, 39 verfügen über in der Fig. 2 nicht dargestellte Rastierungen, die dafür sorgen, dass eine eingestellte Stellung der Kolben 63 auch ohne weitere Druckbeaufschlagung gehalten wird. Eine mögliche Ausführung einer Rastierung ist in Fig. 3 dargestellt.

In Fig. 3 ist beispielhaft eine Rastiervorrichtung 29 an der Schaltgabel 22 der ersten Schalteinrichtung 18 dargestellt. An der Schaltgabel 22 ist ein erster Arm 27 so angeordnet, dass sich zwischen Schaltgabel 22 und erstem Arm 27 ein rechter Winkel ergibt. Der erste Arm 27 weist drei halbkreisförmige Ausnehmungen 28a, 28b, 28c auf. Parallel und den Ausnehmungen 28a, 28b, 28c gegenüber liegend ist ein gehäusefester zweiter Arm 30 angeordnet, auf dem eine Hülse 31 befestigt ist. In der Hülse 31 ist eine Feder 32 angeordnet, die eine Kugel 33 gegen den ersten Arm 27 drückt. Die Ausnehmungen 28a, 28b, 28c sind so auf dem ersten Arm 27 angeordnet, dass in den Fällen, in denen die Kolben 63 der Schalteinrichtungen und damit auch die Schaltgabel 22 in einer der beiden äußeren oder der mittleren Stellung befindet, die Kugel 33 in eine der Ausnehmungen 28a, 28b, 28c gedrückt wird. Damit ist in diesen Fällen die Schaltgabel 22 fixiert und die Stellung ist auch ohne einen Betätigungsdruck auf den Kolben 63 der Schalteinrichtungen stabil und damit arretiert.

Gemäß Fig. 2 sind den Schalteinrichtungen 18, 19, 38, 39 ein erster, ein zweiter, ein dritter und ein vierter Gangschieber SS GS73, SS GS51, SS GS42 und SS GS6R zugeordnet. Die Gangschieber SS GS73, SS GS51, SS GS42 und SS GS6R sind als 6/2-Ventile ausgeführt. In einer ersten, jeweils dargestellten Stellung der Gangschieber SS GS73, SS GS51, SS GS42 und SS GS6R sind die linke und rechte Betätigungsdruckleitung 65, 66 mit dem Tank verbunden. In einer zweiten Stellung der Gangschieber SS GS73, SS GS51, SS GS42 und SS GS6R sind die linke und rechte Betätigungsdruckleitung 65, 66 mit jeweils einem ersten und einem zweiten Versorgungseingang 67, 68 verbunden. Am ersten oder zweiten Versorgungseingang 67, 68 kann ein Öldruck anliegen, der über die Gangschieber SS GS73, SS GS51, SS GS42 und SS GS6R und die Betätigungsdruckleitungen 65, 66 auf die Kolben 63 wirken kann.

Die Einstellung der Gangschieber SS GS73, SS GS51, SS GS42 und SS GS6R erfolgt über jeweils ein Gang-Ventil in Form eines Regelmagnetventils RV73, RV51, RV42, RV6R, die jeweils einen Gang-Steuerdruck auf den jeweils zugeordneten Gangschieber SS GS73, SS GS51, SS GS42 und SS GS6R aufbringen. Die Gangschieber SS GS73, SS GS51, SS GS42 und SS GS6R weisen dazu jeweils einen Steuerdruckeingang 69 auf, der mit dem zugeordneten Regelmagnetventil RV73, RV51, RV42, RV6R verbunden ist. Dem jeweiligen Gang-Steuerdruck wirkt jeweils eine Feder 70 entgegen, die den Gangschieber SS GS73, SS GS51, SS GS42 und SS GS6R in die genannte erste, inaktive Stellung drücken möchte. Durch eine Einstellung eines ausreichend hohen Gang-Steuerdrucks, der bei den Gangschiebern SS GS73, SS GS51 ca 3 bar und den Gangschiebern SS GS42, SS GS6R ca. 5 bar beträgt, kann eine Schalteinrichtung ausgewählt und damit aktiviert werden und der zugehörige Kolben 63 über eine der beiden Betätigungsdruckleitungen 65, 66 und einen der beiden Versorgungseingänge 67, 68 mit Druck beaufschlagt werden.

Damit nicht beide Schalteinrichtungen 18, 19 bzw. 38, 39 eines Teilgetriebes 26, 46 gleichzeitig aktiviert werden und so möglicherweise gleichzeitig zwei Gänge in einem Teilgetriebe 26, 46 eingelegt werden, ist eine gegenseitige Verriegelung der der Schalteinrichtungen 18 und 19 bzw. 38 und 39 vorgesehen. Die Verriegelung ermöglicht es außerdem, dass die Gang-Steuerdrücke zusätzliche Funktionen erfüllen können.

Die Verriegelung der ersten Schalteinrichtungen 18 durch die zweite Schalteinrichtung 19 wird dadurch realisiert, dass der zweite Gang-Steuerdruck, der vom Regelmagnetventil RV 51 erzeugt wird und hauptsächlich der Aktivierung der zweiten Schalteinrichtung 19 dient, so auf den ersten Gangschieber SS GS73 geführt wird, dass er zusätzlich zur Federkraft dem ersten Gang-Steuerdruck, der vom Regelmagnetventil RV 73 erzeugt wird, entgegen wirkt. Der erste Gang-Steuerdruck wirkt dabei auf eine erste und der zweite Gang-Steuerdruck auf eine zweite Wirkfläche. Die zweite Wirkfläche des zweiten Gang-Steuerdrucks am ersten Gangschieber GS SS73 ist dabei größer als die erste Wirkfläche des ersten Gang-Steuerdrucks. Da außerdem noch die Federkraft gegen den ersten Gang-Steuerdruck wirkt, kann sobald der zweite Gang-Steuerdruck eine Druckschwelle erreicht hat, die erste Schalteinrichtung 18 durch den ersten Gang-Steuerdruck nicht mehr aktiviert werden. Die genannte Druckschwelle ist auf jeden Fall dann erreicht, wenn die zweite Schalteinrichtung 19 aktiviert ist.

Die Verriegelung der zweiten Schalteinrichtungen 19 durch die erste Schalteinrichtung 18 wird analog dadurch realisiert, dass der erste Gang-Steuerdruck, der vom Regelmagnetventil RV 73 erzeugt wird und hauptsächlich der Aktivierung der ersten Schalteinrichtung 18 dient, so auf den zweiten Gangschieber SS GS 51 geführt wird, dass er zusätzlich zur Federkraft dem zweiten Gang-Steuerdruck, der vom Regelmagnetventil RV 51 erzeugt wird, entgegen wirkt. Bezüglich der Wirkflächen der Gang-Steuerdrücke am Gangschieber GS SS51 gilt dasselbe wie beim Gangschieber GS SS73.

Damit verriegeln sich die erste und die zweite Schalteinrichtung 18, 19 gegenseitig.

Analog dazu ist auch eine Verriegelung der dritten und vierten Schalteinrichtung 38, 39 des zweiten Teilgetriebes 46 ausgeführt. Der einzige Unterschied besteht darin, dass bei den Gangschiebern SS GS42 und SS GS6R die genannten ersten und zweiten Wirkflächen der Gang-Steuerdrücke gleich groß sind. Eine sichere Verriegelung wird in diesen Fällen durch eine entsprechende Auslegung der Feder 70 erreicht. Die aufgebrachte Federkraft ist insbesondere höher als bei den Gangschiebern SS GS 73 und SS GS51.

Die Öldrücke an den ersten und zweiten Versorgungseingängen 67, 68 der Gangschieber SS GS73, SS GS51, SS GS42 und SS GS6R werden von einem Versorgungs-Ventil in Form eines Versorgungsdruckschiebers RS GS eingestellt. Der Versorgungsdruckschieber RS GS ist als ein 5/3-Ventil ausgeführt, der zwei Versorgungsausgänge 71, 72 aufweist, die jeweils mit den Versorgungseingängen 67, 68 der Gangschieber SS GS73, SS GS51, SS GS42 und SS GS6R verbunden sind. Neben zwei Abflüssen zum Tank weist der Versorgungsdruckschieber RS GS noch eine Verbindung zum Arbeitsdruckschieber RS AD auf, über die er mit Arbeitsdruck versorgt wird. In einer ersten, dargestellten Stellung des Versorgungsdruckschiebers RS GS wird der erste Versorgungseingang 67 der Gangschieber SS GS73, SS GS51, SS GS42 und SS GS6R mit Arbeitsdruck beaufschlagt. Bei entsprechender Stellung der Gangschieber SS GS73, SS GS51, SS GS42 und SS GS6R könnte damit ein Kolben 63 der Schalteinrichtungen 18, 19, 38, 39 bezüglich der Fig. 2 nach rechts verschoben werden. In einer zweiten, mittleren Stellung des Versorgungsdruckschiebers RS GS sind beide Versorgungseingänge 67, 68 der Gangschieber SS GS73, SS GS51, SS GS42 und SS GS6R mit dem Tank verbunden. Damit kann kein Betätigungsdruck auf den Kolben 63 wirken. In einer dritten Stellung des Versorgungsdruckschiebers RS GS wird der zweite Versorgungseingang 68 der Gangschieber SS GS73, SS GS51, SS GS42 und SS GS6R mit Arbeitsdruck beaufschlagt. Bei entsprechender Stellung der Gangschieber SS GS73, SS GS51, SS GS42 und SS GS6R könnte damit ein Kolben 63 der Schalteinrichtungen 18, 19, 38, 39 bezüglich der Fig. 2 nach links verschoben werden. Durch die mittlere Stellung des Versorgungsdruckschiebers RS GS ist gewährleistet, dass nie an beiden Versorgungseingängen 67, 68 der Gangschieber SS GS73, SS GS51, SS GS42 und SS GS6R gleichzeitig Druck anliegen kann. Der Versorgungsdruckschieber RS GS kann also den Arbeitsdruck als Versorgungsdruck wahlweise auf einen der beiden Versorgungsausgänge 71, 72 leiten.

Die Ansteuerung des Versorgungsdruckschiebers RS GS erfolgt durch ein Versorgungs-Ventil in Form eines Regelmagnetventils RV GS, das einen Versorgungs-Steuerdruck auf den Versorgungsdruckschieber RS GS aufbringt. Der Versorgungs-Steuerdruck wirkt gegen eine Feder 73, die so angeordnet ist, dass sie den Versorgungsdruckschieber RS GS in die genannte erste Stellung drückt. Außerdem werden die Drücke an den Versorgungsausgängen 71, 72 auf den Versorgungsdruckschieber RS GS zurückgeführt. Der Druck am Versorgungsausgang 71 wirkt dabei gleichsinnig zum Versorgungs-Steuerdruck und der Druck am Versorgungsausgang 72 gleichsinnig zur Feder 73. Damit ist der Versorgungsdruckschieber RS GS als ein Regelschieber ausgeführt, womit ein Solldruck an einem der Versorgungseingänge 71, 72, der über den Versorgungs-Steuerdruck vorgegeben wird, eingeregelt werden kann.

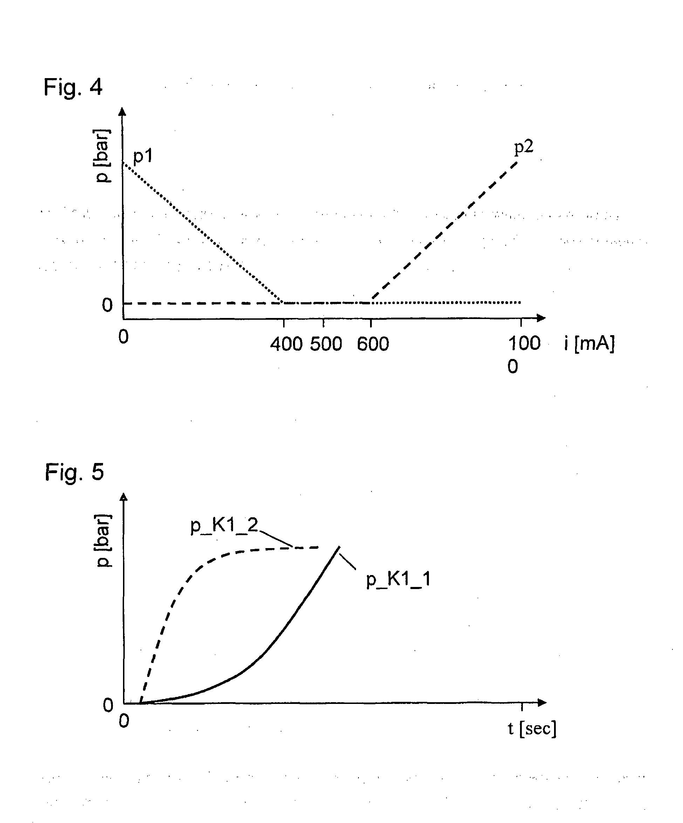

In Fig. 4 sind die sich ergebenden Kennlinien des Versorgungsdruckschiebers RS GS über einem Ansteuerstrom des Regelmagnetventils RV GS schematisch dargestellt. Dabei wird davon ausgegangen, dass das Regelmagnetventil RV GS eine steigende Kennlinie aufweist und es sich bei der Strom-Druck-Kennlinie des Regelmagnetventils RV GS idealer weise um eine Ursprungsgerade handelt. In der Fig. 4 ist der Druck am ersten Versorgungsausgang 71 mit p1 (gepunktete Linie) und der Druck am zweiten Versorgungsausgang 72 mit p2 (gestrichelte Linie) bezeichnet. Bei einem Ansteuerstrom von 0 mA ergibt sich für den Druck am ersten Versorgungsausgang 71 ein Maximalwert von beispielsweise 20 bar. Vorausgesetzt, dass der Arbeitsdruck mindestens so hoch ist, wird dieser Druck vom Versorgungsdruckschieber RS GS durch eventuell notwendige Wechsel zwischen der genannten ersten und zweiten Stellung eingeregelt. Der Druck am zweiten Versorgungsausgang 72 ist dabei 0. Mit steigendem Ansteuerstrom fällt der eingeregelte Druck am ersten Versorgungsausgang 71 proportional ab, weshalb auch die Rückführung dieses Drucks gleichsinnig zum Versorgungs-Steuerdrucks notwendig ist. Der Druck am ersten Versorgungsausgang 71 erreicht bei einem Ansteuerstrom von ungefähr 400 mA den Wert 0 und bleibt auch bei weiter steigendem Ansteuerstrom konstant auf 0. Der Druck am zweiten Versorgungsausgang 72 bleibt bis zu einem Ansteuerstrom von ungefähr 600 mA konstant auf 0 und steigt dann mit steigendem Ansteuerstrom proportional an. Deshalb muss die Rückführung des Drucks am zweiten Versorgungsausgang 72 auch gegensinnig zum Versorgungs-Steuerdruck erfolgen. Der durch den Versorgungs-Steuerdruck vorgegebene Soll-Druck am zweiten Versorgungsausgang 72 wird vom Versorgungsdruckschieber RS GS durch eventuell notwendige Wechsel zwischen der genannten zweiten und dritten Stellung eingeregelt. Liegt der Ansteuerstrom zwischen ungefähr 400 und 600 mA, so befindet sich der Versorgungsdruckschieber RS GS in der genannten zweiten Stellung und es liegt an keinem der Versorgungsausgänge 71, 72 ein Druck an. Damit kann mittels des Versorgungsdruckschiebers RS GS entweder am ersten oder am zweiten Versorgungsausgang 71, 72 ein bestimmter Druck eingestellt werden.

Durch eine entsprechende Ansteuerung des Versorgungsdruckschiebers RS GS kann damit die Bewegungsrichtung eines ausgewählten Kolbens 63 einer Schalteinrichtung 18, 19, 38, 39 und damit die Schaltrichtung ausgewählt werden. Außerdem kann die Höhe des Betätigungsdrucks auf die Kolben 63 eingestellt bzw. eingeregelt werden.

Zur Durchführung einer Schaltung im Doppelkupplungsgetriebe 10 wird damit durch entsprechende Ansteuerung des Regelmagnetventils RV GS über den Versorgungsdruckschieber RS GS eine Schaltrichtung ausgewählt und ein gewünschter Versorgungsdruck für die der Gangschieber SS GS73, SS GS51, SS GS42 und SS GS6R eingeregelt. Durch entsprechende Ansteuerung der Regelmagnetventile RV73, RV51, RV42, RV6R wird außerdem über die Gangschieber SS GS73, SS GS51, SS GS42 und SS GS6R eine Schalteinrichtung 18, 19, 38, 39 ausgewählt, wobei es durch die Verriegelung unmöglich ist, beide Schalteinrichtungen 18,19 bzw. 38, 39 eines Teilgetriebes 26, 46 gleichzeitig auszuwählen. Durch eine entsprechende Einstellung des Gang-Steuerdrucks des ausgewählten Gangschiebers kann eine Durchflussmenge durch den Gangschieber in den ausgewählten Druckraum 74, 75 gesteuert werden. Damit ist es möglich, die Geschwindigkeit des Kolbens 63 bei der Schaltung zu variieren. Durch die Möglichkeit den Versorgungs- und damit den Betätigungsdruck einzustellen und außerdem die Durchflussmenge in den Druckraum 74, 75 zu steuern, kann der Schaltungsablauf im Doppelkupplungsgetriebe 10 genau vorgegeben werden.

Das Hydrauliksystem 50 verfügt zusätzlich über ein Kupplungssteuersystem 76 mittels welchem die Kupplungen 12, 13 betätigt, also mit Betätigungs- bzw. Kupplungsdruck beaufschlagt werden können. Damit können die Kupplungen 12, 13 geschlossen und geöffnet oder auch in einer definierten Schlupfstellung gehalten werden.

Das Kupplungssteuersystem 76 wird ebenfalls vom Arbeitsdruckschieber RS AD mit Arbeitsdruck versorgt. Der ersten Kupplung 12 ist ein erster Kupplungsschieber RV K1 und der zweiten Kupplung 13 ein zweiter Kupplungsschieber RV K2 zugeordnet, welche beide mit Arbeitsdruck versorgt werden. Die Kupplungsschieber RV K1 und RV K2 sind als direkt angesteuerte Regelschieber ausgeführt, die von der elektronischen Steuerung angesteuert werden. Die Kupplungsschieber RV K1 und RV K2 sind als 3/2-Ventile ausgeführt und können über jeweils eine erste und zweite Kupplungsleitung 77, 78 einen gewünschten Kupplungsdruck an der ersten und zweiten Kupplung 12, 13 einregeln. Dazu können die Kupplungsleitungen 77, 78 entweder mit dem Arbeitsdruck oder dem Tank verbunden werden.

Zwischen den Kupplungsschiebern RV K1 und RV K2 und den Kupplungen 12 und 13 ist ein Notschieber SS Not angeordnet, mittels welchem die Kupplungsleitungen 77, 78 in einer Notstellung des Notschiebers SS Not aufgetrennt und die Kupplungen 12 und 13 mit dem Tank verbunden werden können. In diesem Fall fällt der Kupplungsdruck an den Kupplungen 12 und 13 schlagartig auf Null ab und die Kupplungen 12 und 13 sind damit geöffnet. Damit kann die elektronische Steuerung beispielsweise bei einem erkannten Fehler im Doppelkupplungsgetriebe 10 eine Notöffnung auslösen und die Kupplungen 12 und 13 schlagartig öffnen. Der Notschieber SS Not ist dazu als 6/2-Ventil ausgeführt, auf das ein Not-Steuerdruck gegen eine Feder 79 wirkt. Ist die durch den Not-Steuerdruck wirkende Kraft kleiner als die Kraft der Feder 79, so wird der Notschieber SS Not in die dargestellte Stellung, die Normalstellung gedrückt, in der die Verbindung zwischen den Kupplungsschiebern RV K1, RV K2 und den Kupplungen 12, 13 hergestellt ist.

Als Not-Steuerdruck wirken gemeinsam der Gang-Steuerdruck der Gangschieber SS GS42 und SS GS6R, die primär zur Auswahl einer der Schalteinrichtungen 38, 39 des zweiten Teilgetriebes 46 dienen. Die Wirkfläche des Not-Steuerdrucks und die Feder 79 sind so ausgelegt, dass der maximale Gang-Steuerdruck einer der beiden Gangsschieber SS GS42 und SS GS6R alleine nicht ausreichend ist, um den Notschieber SS Not aus der dargestellten Stellung zu verschieben und eine Not-Öffnung auszulösen. Zur Auslösung einer Not-Öffnung müssen also die beiden zugehörigen Regelmagnetventile RV 42 und RV 6R angesteuert werden. Die Auslegung ist insbesondere so, dass beide Regelmagnetventile RV 42 und RV 6R nahezu ihren maximalen Druck liefern müssen.

Es wäre aber auch eine Auslegung möglich, bei der ein Gang-Steuerdruck alleine eine Not-Öffnung auslösen könnte. In diesem Fall müsste der erforderliche Druck für die Not-Öffnung deutlich oberhalb des für eine Aktivierung der entsprechenden Schalteinrichtung notwendigen Drucks liegen. Beispielsweise könnte für eine Aktivierung der Schalteinrichtung ein Druck von 3 bar ausreichend und für eine Not-Öffnung ein Druck von 5 bar notwendig sein. In diesem Fall könnte dann auch nur ein Gang-Steuerdruck als Not-Steuerdruck auf den Notschieber geführt werden.

Der Notschieber SS Not wird in einem Normalbetrieb des Doppelkupplungsgetriebes 10 nie geschaltet. Damit besteht die Gefahr, dass ein etwaiger Defekt am Notschieber SS Not erst dann festgestellt werden würde, wenn eine Not-Öffnung erfolgen soll. Um dies zu vermeiden, wird von der elektronischen Steuerung eine Funktionsüberprüfung des Notschiebers SS Not durchgeführt. Dazu wird in einer Neutralstellung des Doppelkupplungsgetriebes 10, also in einem Zustand, in dem kein Gang im Doppelkupplungsgetriebe 10 eingelegt ist, also beispielsweise in der Fahrstufe N oder P, ein Druckaufbau nach dem ersten und/oder zweiten Kupplungsschieber RV K1 und RV K2 bei den beiden Stellungen des Notschiebers SS Not verglichen. Dazu wird ein Kupplungsbetätigungsdruck sprungartig von Null auf einen festgelegten Wert erhöht. Die für den Vergleich notwendigen Duckverläufe können mittels Drucksensoren 108, 109 gemessen werden, die jeweils zwischen dem ersten und zweiten Kupplungsschieber RV K1, RV K2 und dem Notschieber SS Not angeordnet sind.

Befindet sich der Notschieber SS Not in der Notstellung, sind die Kupplungsleitungen 77, 78 durch den Notschieber SS Not abgeschlossen. In der Normalstellung dagegen sind die Kupplungsleitungen 77, 78 mit nicht dargestellten Druckräumen der Kupplungen 12, 13 verbunden. Damit kann sich Öl, das in der Normalstellung des Notschiebers SS Not von den Kupplungsschiebern RV K1 und RV K2 in die Kupplungsleitungen 77, 78 gefördert wird, auf ein deutlich größeres Volumen verteilen. Damit steigen die Drücke in den Kupplungsleitungen 77, 78 in der Normalstellung des Notschiebers SS Not langsamer bzw. flacher an als in der Notstellung. Damit der Druckaufbau bei den beiden Stellungen des Notschiebers SS Not auch deutlich unterscheidet, sollte insbesondere zwischen den Drucksensoren 108, 109 und den Kupplungen keine Blenden angeordnet sein. Eine an dieser Position angeordnete Blende würde bei Normalstellung des Notschiebers SS Not den Ölstrom in die Kupplungen 12, 13 behindern und so einen Staudruck erzeugen. Dieser Staudruck würde von den Drucksensoren 108, 109 gemessen werden. Damit wäre der Unterschied beim Druckaufbau bei den beiden Stellungen des SS Not nur gering und könnte unter Umständen nicht sicher erkannt werden. Aus diesem Grund sind Blenden 110 und 111 jeweils zwischen den Drucksensoren 108, 109 und den Kupplungsschiebern RV K1 und RV K2 angeordnet.

Die Blenden können auch zwischen dem Arbeitsdruckschieber RS AD und den Kupplungsschiebern RV K1 und RV K2 angeordnet sein. Es ist ebenso möglich, dass die Blenden so angeordnet sind, dass sie jeweils zwischen Abzweigungen der Rückführleitungen der Kupplungsschieber RV K1 und RV K2 und den Kupplungsschiebern RV K1 und RV K2 angeordnet sind.

Zur Funktionsüberprüfung des Notschiebers SS Not werden zunächst die Kupplungsschieber RV K1 und/oder RV K2 in der Normalstellung des Notschiebers SS Not angesteuert und anschließend mit einer identischen Ansteuerung in einer angesteuerten Notstellung des Notschiebers SS Not. Anschließend wird der Druckverlauf bzw. der Druckaufbau bei den beiden Ansteuerungen verglichen. Ist der Druckaufbau bei angesteuerter Notstellung des Notschiebers SS Not schneller bzw. steiler, so war die Einstellung der Notstellung erfolgreich und die Funktion des Notschiebers SS Not ist gewährleistet. Eine einfache Methode zur Bestimmung einer Kenngröße für die verschiedenen Gradienten ist es, die Zeitspanne bis zum Erreichen eines bestimmten Druckwerts zu messen. Ist der Unterschied zwischen der Zeitspanne bei angesteuerter Normalstellung um eine einstellbare Zeitdauer länger als die Zeitspanne bei angesteuerter Notstellung, so wird daraus geschlossen, dass der Notschieber SS Not die angesteuerte Notstellung auch tatsächlich eingenommen hat. Für die Funktionsprüfung ist es ausreichend, nur den Druckaufbau eines Drucks zu vergleichen und dementsprechend auch nur einen Kupplungsschieber RV K1 oder RV K2 anzusteuern.

In Fig. 5 sind beispielhaft zwei Druckverläufe des Drucks zwischen dem ersten Kupplungsschieber RV K1 und dem Notschieber SS Not über der Zeit dargestellt. Die durchgezogene Linie (p_K1_1) zeigt den Druckaufbau bei einer Normalstellung des Notschiebers SS Not, die gestrichelte Linie (p_K1_2) den Druckaufbau bei einer angesteuerten Notstellung. Wie deutlich zu sehen ist, steigt der Druck bei Normalstellung des Notschiebers SS Not deutlich langsamer und flacher an. Der Druckaufbau bei Normalstellung hat einen prinzipiell konkaven und der Druckaufbau in der Notstellung einen prinzipiell konvexen Verlauf. Damit kann die elektronische Steuerung erkennen, dass die angesteuerte Notstellung auch tatsächlich eingestellt wurde und somit der Notschieber funktioniert.

Das Schmier-Kühlsystem 80 des Hydrauliksystems 50 wird hauptsächlich vom Arbeitsdruckschieber RS AD über dessen vierten Anschluss über einen Zuführkanal 106 mit Öl versorgt. Dieses Öl wird auf einen Schmierdruckschieber RS SmD geleitet, der einen Schmierdruck im Schmier-Kühlsystem 80 einregelt. Die Höhe des Schmierdrucks ergibt sich zum einen durch die Auslegung einer Feder 81, die gegen den zurückgeführten Schmierdruck wirkt und zum anderen in Abhängigkeit eines Schmier-Steuerdrucks, der ebenfalls gegen die Feder 81 wirkt. Die Feder 81 ist beispielsweise so ausgelegt, dass sich ohne zusätzlichen Schmier-Steuerdruck ein Schmierdruck von ca. 3,5 bar einstellt. Die Einstellung des Schmier-Steuerdrucks wird weiter unten beschrieben.

Vom Schmierdruckschieber RS SmD gelangt das Öl zu einem an sich bekannten Thermostatventil 82, mittels welchem das Öl in Abhängigkeit von einer Öltemperatur entweder über einen Ölkühler 83 oder direkt auf einen nach dem Ölkühler 83 angeordneten Ölfilter 84 geleitet wird. Zur schnelleren Aufheizung des Doppelkupplungsgetriebes 10 wird der Ölkühler 83 bei niedrigen Öltemperaturen umgangen. Parallel zum Ölfilter 84 ist ein Rückschlagventil 85 so angeordnet, dass ab einem bestimmten Staudruck vor dem Ölfilter 84 das Öl auch über das Rückschlagventil 85 am Ölkühler 84 vorbei strömen kann.

Nach dem Ölkühler 84 / Rückschlagventil 85 sind ein erster Kühlungsschieber SS K und ein zweiter Kühlungsschieber RS KK parallel angeordnet, so dass beide über Ölkühler 84 / Rückschlagventil 85 mit Öl versorgt werden. Der zweite Kühlungsschieber RS KK ist als 5/3-Ventil ausgeführt. Drei Eingänge 86, 87, 88 des Kühlungsschiebers RS KK sind mit dem Ölkühler 84 / Rückschlagventil 85 verbunden, wobei der erste Eingang 86 über eine erste Blende 89, der zweite Eingang 87 über eine zweite Blende 90 und der dritte Eingang 88 direkt, also ohne Zwischenschaltung einer Blende mit Öl versorgt wird. Die erste Blende 89 hat dabei insbesondere einen größeren Durchmesser als die zweite Blende 90.

Ein erster Ausgang 91 des Kühlungsschiebers RS KK ist über eine dritte Blende 93 mit einem Kühlsystem 94 eines Radsatzes des Doppelkupplungsgetriebes 10 und über eine vierte Blende 95 mit einem Kühlsystem 96 der elektronischen Steuerung verbunden. Ein zweiter Ausgang des Kühlungsschiebers RS KK ist über einen ersten Kühlkanal 99, in dem eine fünfte Blende 97 angeordnet ist, mit einem Kühlsystem 98 der Kupplungen 12, 13 verbunden. Mit der Wahl der Durchmesser der genannten Blenden 89, 90, 93, 95 und 97 lässt sich die Aufteilung der Ölströme zu den Kühlsystemen beeinflussen und auslegen.

In einer ersten, dargestellten Stellung des Kühlurigsschiebers RS KK ist nur der dritte Eingang 88 mit dem zweiten Ausgang 92 und damit mit dem Kühlsystem 98 der Kupplungen 12, 13 verbunden. Die anderen Ein- und Ausgänge haben keine Verbindung. Damit fließt in dieser ersten Stellung des Kühlungsschiebers RS KK kein Öl in die Kühlsysteme 94 und 96. In einer zweiten, mittleren Stellung des Kühlungsschiebers RS KK sind der erste und zweite Eingang 86, 87 gemeinsam mit dem ersten Ausgang 91 und damit mit den Kühlsystemen 94 und 96 verbunden. Außerdem ist wie in der ersten Stellung der dritte Eingang 88 mit dem zweiten Ausgang 92 verbunden. In einer dritten Stellung ist nur der zweite Eingang 87 mit dem ersten Ausgang 91 verbunden. In dieser Stellung fließt also über den Kühlungsschieber RS KK kein Öl zum Kühlsystem 98 der Kupplungen 12, 13.

Die Stellung des Kühlungsschiebers RS KK ergibt sich aus einer Kraft einer Feder 100 gegen die der zurückgeführte Druck am zweiten Ausgang 92 des Kühlungsschiebers RS KK und ein zweiter Kühl-Steuerdruck wirkt. Als zweiter Kühl-Steuerdruck wird der vierte Gang-Steuerdruck des Regelmagnetventils RV 6R genutzt, dessen Hauptfunktion es ist, die vierte Schalteinrichtung 39 zu aktivieren. Da zur Aktivierung der vierten Schalteinrichtung wie beschrieben ca. 5 bar notwendig sind, kann der Druckbereich darunter zur Ansteuerung des zweiten Kühlungsschieber RS KK genutzt werden. Bei kleinem zweiten Kühl-Steuerdruck und kleinem Druck am zweiten Ausgang 92 ist der Kühlungsschieber RS KK in der ersten Stellung. Durch einen hohen zweiten Kühl-Steuerdruck kann die dritte Stellung eingestellt werden. Durch die Rückführung des Drucks am zweiten Ausgang 92 kann ein durch den zweiten Kühl-Steuerdruck und die Feder 100 vorgegebener Druckwert am zweiten Ausgang 92 und damit im ersten Kühlkanal 99 zum Kühlsystem der Kupplungen 12, 13 eingeregelt werden.

Der erste Kühlungsschieber SS K ist als ein 6/2-Ventil ohne Rückführung ausgeführt. Er wird vom Ölkühler 84 / Rückschlagventil 85 mit einem Ölvolumenstrom versorgt. Die dafür zur Verfügung stehende Ölmenge hängt unter anderem von der Stellung des zweiten Kühlungsschiebers RS KK ab. Kann über den zweiten Kühlungsschieber RS KK viel Öl abfließen, ist der Ölvolumenstrom zum ersten Kühlungsschieber SS K kleiner als in dem Fall, in dem über den zweiten Kühlungsschieber RS KK wenig Öl abfließen kann. Die über den zweiten Kühlungsschieber RS KK abfließende Ölmenge ist von dessen Stellung abhängig. Damit ist der Ölvolumenstrom vom Ölkühler 84 / Rückschlagventil 85 zum ersten Kühlungsschieber SS K mittels des zweiten Kühlungsschiebers RS KK beeinflussbar.

In einer ersten dargestellten Stellung des ersten Kühlungsschiebers SS K wird das Öl, das vom Ölkühler 84 / Rückschlagventil 85 kommt, über einen Rückführkanal 105 zur Saugseite der Hauptpumpe 51 geleitet. Damit kann überschüssiges Öl aus dem Schmier-Kühlsystem 80 direkt wieder in den Hochdruckkreis gepumpt werden. Alle anderen Anschlüsse haben in dieser Stellung entweder keine Verbindung oder sind mit dem Tank verbunden. In einer zweiten Stellung des Kühlungsschiebers SS K wird das Öl, das vom Ölkühler 84 / Rückschlagventil 85 kommt, über einen zweiten Kühlkanal 101, der parallel zum ersten Kühlkanal 99 angeordnet ist, zum Kühlsystem 98 der Kupplungen 12, 13 geleitet. Die Verbindung zur Saugseite der Hauptpumpe 51 ist in diesem Fall unterbrochen. Außerdem wird über den ersten Kühlungsschieber SS K in dessen zweiter Stellung eine Verbindung zwischen der Zusatzpumpe 56 und dem Schmier-Kühlsystem 80 hergestellt. Zum einen wird ein etwaiger Druck der Zusatzpumpe 56 über einen Steuerkanal 102 als Schmier-Steuerdruck auf den Schmierdruckschieber RS SmD geleitet. Sofern die Zusatzpumpe 56 einen Öldruck aufbaut, führt dies zu einer Erhöhung des Schmierdrucks im Schmier-Kühlsystem 80 und damit auch zu einer Erhöhung der für die Kühlung und Schmierung zur Verfügung stehenden Ölmenge. Das von der Zusatzpumpe 56 geförderte Öl wird zusätzlich über einen Zusatzölkanal 103, der teilweise dem Steuerkanal 102 entspricht, über ein Rückschlagventil 104 in den ersten Kühlkanal 99 und damit zum Kühlsystem 98 der Kupplungen 12, 13 geleitet. Das Rückschlagventil 104 ist so angeordnet, dass Öl nur von der Zusatzpumpe 56 in Richtung erstem Kühlkanal 99 fließen kann. Damit wird die zur Kühlung der Kupplungen 12, 13 zur Verfügung stehende Ölmenge erhöht.

Auf den ersten Kühlungsschieber SS K wirkt ein erster Kühl-Steuerdruck, der sich aus dem ersten und zweiten Gang-Steuerdruck der Regelmagnetventile RV 73 und RV 51 zusammensetzt. Diese Gang-Steuerdrücke dienen hauptsächlich zur Auswahl der ersten und zweiten Schalteinrichtung 18, 19 des ersten Teilgetriebes 26. Der erste Kühl-Steuerdruck wirkt gegen eine Feder 107, die so ausgelegt ist, dass ein Wechsel von der beschriebenen ersten in die zweite Stellung des ersten Kühlungsschiebers SS K bei einem Druck von ca. 5 bar erfolgt. Da für die Auswahl der ersten oder zweiten Schalteinrichtung 18, 19 wie oben beschrieben, ein deutlich kleinerer Druck ausreichend ist, kann die Auswahl einer Schalteinrichtung 18, 19 erfolgen, ohne dass dies einen Einfluss auf die Stellung des ersten Kühlungsschiebers SS K hat.

Falls der erste Kühlungsschieber SS K in die zweite Stellung gebracht werden soll, ohne dass eine der beiden Schalteinrichtungen 18 oder 19 ausgewählt werden sollen, so wird als erster und zweiter Gang-Steuerdruck von den Regelmagnetventilen RV 73 und RV 51 ein Druckwert von ca. 2,5 - 2,7 bar eingestellt. Diese Gang-Steuerdrücke sind jeweils zu klein um die erste oder zweite Schalteinrichtung 18 oder 19 auszuwählen, gemeinsam sind sie aber ausreichend, um den ersten Kühlungsschieber SS K in die zweite Stellung zu bringen.

Das Schmier-Kühlsystem 80 ermöglicht es damit, zwischen verschiedenen Kühlungsarten umzuschalten. In einer ersten Kühlungsart, bei der alle Kühlsysteme 94, 96, 98 mit einer Grundölmenge versorgt werden, ist der erste Kühlungsschieber SS K in der dargestellten ersten Stellung, so dass Öl vom Schmier-Kühlsystem 80 zur Saugseite der Hauptpumpe 51 zurückgeführt wird. Mittels des vierten Gang-Steuerdrucks, der als zweiter Kühl-Steuerdruck am zweiten Kühlungsschieber RS KK wirkt, wird ein gewünschter Druck im ersten Kühlkanal 99 zum Kühlsystem 98 der Kupplungen 12, 13 eingeregelt. Der zweite Kühlungsschieber RS KK befindet sich damit in einer Regelstellung zwischen der beschriebenen ersten und zweiten Stellung. Die erste und zweite Blende 89, 90 sind insbesondere so ausgeführt, dass die größte Menge zur Hauptpumpe 51 zurückfließt und die kleinste Menge in Richtung Kühlsysteme 94 und 96 fließt.

In einer zweiten Kühlart, in der das Kühlsystem 98 der Kupplungen 12, 13 nicht mit Öl versorgt wird, ist der erste Kühlungsschieber SS K ebenfalls in der dargestellten ersten Stellung. Der zweite Kühlungsschieber RS KK wird mittels des zweiten Kühl-Steuerdrucks in die beschriebene dritte Stellung gestellt, in der kein Öl in Richtung des Kühlsystems 98 der Kupplungen 12, 13 fließt.

In einer dritten Kühlart, in der eine erhöhte Ölmenge in das Kühlsystem 98 der Kupplungen 12, 13 geleitet wird, befindet sich der erste Kühlungsschieber SS K auf Grund eines entsprechenden ersten Kühl-Steuerdrucks in der beschriebenen zweiten Stellung. Damit wird kein Öl vom Schmier-Kühlsystem 80 zur Saugseite der Hauptpumpe 51 zurückgeführt. Das vom Ölfilter 84 / Rückschlagventil 85 in Richtung erstem Kühlungsschieber SS K fließende Öl wird über den zweiten Kühlkanal 101 zum Kühlsystem 98 der Kupplungen 12, 13 geleitet. Über den zweiten Kühl-Steuerdruck kann die Verteilung des über den zweiten Kühlungsschieber RS KK fließenden Öls eingestellt werden. Die Zusatzpumpe 56 ist dabei nicht in Betrieb.

Eine vierte Kühlart, in der eine sehr große Ölmenge in das Kühlsystem 98 der Kupplungen 12, 13 geleitet wird, unterscheidet sich von der dritten Kühlart nur dadurch, dass die Zusatzpumpe 56 zusätzlich Öl in das Schmier-Kühlsystem 80 fördert. Damit wird wie oben beschrieben durch den Schmierdruckschieber RS SmD der Schmierdruck erhöht, was zu einer Erhöhung der im Schmier-Kühlsystem 80 zur Verfügung stehenden Ölmenge führt. Außerdem fließt Öl von der Zusatzpumpe 56 über den Zusatzölkanal 103 zum Kühlsystem 98 der Kupplungen 12, 13. Damit wird eine maximale Ölmenge zum Kühlsystem 98 der Kupplungen 12, 13 gefördert.

Die Auswahl einer Kühlart durch die elektronische Steuerung erfolgt hauptsächlich durch den Kühlbedarf der Kupplungen 12, 13.

## Patentansprüche

1. Hydraulische Steuerung für ein automatisiertes Getriebe insbesondere ein Doppelkupplungsgetriebe eines Kraftfahrzeugs mit einem Schmier-Kühlsystem (80) und einer Hauptpumpe (51) und einer steuerbaren Zusatzpumpe (56), welche gemeinsam eine Ölversorgung der hydraulischen Steuerung (50) sicherstellen,
**dadurch gekennzeichnet, dass**
das Schmier-Kühlsystem (80) einen Schmierdruckschieber (RS SmD) zur Einstellung eines Schmierdrucks im Schmier-Kühlsystem (80) aufweist und die Zusatzpumpe (56) in einen Steuerkanal (102) des Schmierdruckschiebers (RS SmD) fördern und so einen Schmier-Steuerdruck aufbauen kann, wobei der Schmierdruckschieber (RS SmD) so ausgeführt ist, dass der eingestellte Schmierdruck mit steigendem Schmier-Steuerdruck ansteigt und eine untere Grenze des Schmierdrucks durch eine Feder (81) festgelegt wird.

2. Hydraulische Steuerung nach Anspruch 1,
**dadurch gekennzeichnet, dass**
das Schmier-Kühlsystem (80) einen ersten, ansteuerbaren Kühlungsschieber (SS K) aufweist, mittels welchem eine Verbindung zwischen dem Steuerkanal (102) des Schmierdruckschiebers (RS SmD) und der Zusatzpumpe (56) hergestellt und getrennt werden kann.

3. Hydraulische Steuerung nach Anspruch 1 oder 2,
**dadurch gekennzeichnet, dass**
das Schmier-Kühlsystem (80) über einen Zuführkanal (106) mit einem Ölvolumenstrom von der Hauptpumpe (51) versorgt wird und zusätzlich einen Zusatzölkanal (103) aufweist, über welchen ein zusätzlicher Ölvolumenstrom von der Zusatzpumpe (56) in das Schmier-Kühlsystem (80) fließen kann, wobei der Steuerkanal (102) des Schmierdruckschiebers (RS SmD) zumindest teilweise dem Zusatzölkanal (103) entspricht.

4. Hydraulische Steuerung nach einem der Ansprüche 1 bis 3,
**dadurch gekennzeichnet, dass**
das Schmier-Kühlsystem (80) einen ersten Kühlkanal (99) zur Kühlung einer Anfahrkupplung (12, 13) des Getriebes (10) aufweist und mittels des ersten, ansteuerbaren Kühlungsschiebers (SS K) ein zweiter Kühlkanal (101), der parallel zum ersten Kühlkanal (99) angeordnet ist, geöffnet und geschlossen werden kann.

5. Hydraulische Steuerung nach Anspruch 4,
**dadurch gekennzeichnet, dass**
mittels des ersten Kühlungsschiebers (SS K) ein Rückführkanal (105), über welchen ein Ölvolumenstrom vom Schmier-Kühlsystem (80) zu einer Ansaugseite einer Pumpe (51) der hydraulischen Steuerung (50) fließen kann, geöffnet und geschlossen werden kann.

6. Hydraulische Steuerung nach Anspruch 4 oder 5,
**dadurch gekennzeichnet, dass**
mittels des ersten Kühlungsschiebers (SS K) der Zusatzölkanal (103), über welchen ein zusätzlicher Ölvolumenstrom in das Schmier-Kühlsystem (80) fließen kann, geöffnet und geschlossen werden kann.

7. Hydraulische Steuerung nach Anspruch 6,
**dadurch gekennzeichnet, dass**
der Zusatzölkanal (103) in den ersten oder zweiten Kühlkanal (103, 99) zur Kühlung der Anfahrkupplung (12, 13) mündet.

8. Hydraulische Steuerung nach einem der Ansprüche 4 bis 7,
**dadurch gekennzeichnet, dass**
das Schmier-Kühlsystem (80) einen zweiten, ansteuerbaren Kühlungsschieber (RS KK) aufweist, mittels welchem ein Ölvolumenstrom im ersten Kühlkanal (99) einstellbar ist.

9. Hydraulische Steuerung nach Anspruch 8,
**dadurch gekennzeichnet, dass**
der zweite Kühlungsschieber (RS KK) von einem zweiten ansteuerbaren Ventil (RV 6R) mit einem zweiten Kühl-Steuerdruck angesteuert wird, welches eine von der Einstellung des zweiten Kühl-Steuerdrucks abweichende Hauptfunktion innerhalb der hydraulischen Steuerung (50) aufweist.

10. Hydraulische Steuerung nach einem der Ansprüche 2 bis 9,
**dadurch gekennzeichnet, dass**
der erste Kühlungsschieber (SS K) von einem ersten ansteuerbaren Ventil (RV 42) mit einem ersten Kühl-Steuerdruck angesteuert wird, welches eine von der Einstellung des ersten Kühl-Steuerdrucks abweichende Hauptfunktion innerhalb der hydraulischen Steuerung (50) aufweist.

11. Hydraulische Steuerung nach einem der Ansprüche 1 bis 10,
gekennzeichnet durch
ein Gangbetätigungssystem (62), welches
- eine erste und eine zweite fluidbetätigte Schalteinrichtung (18, 19), mittels welchen jeweils ein Losrad (17a, 17b) mit einer Welle (16) gekoppelt werden und so ein Gang im Zahnräderwechselgetriebe eingelegt werden kann,
- einen ersten und einen zweiten Gangschieber (SS GS73, SS GS51), welche jeweils der ersten und zweiten Schalteinrichtung (18, 19) zugeordnet sind und mittels welchen in Abhängigkeit eines Gang-Steuerdrucks ein Betätigungsdruck auf die jeweils zugeordnete Schalteinrichtung (18, 19) aufbringbar ist,
- ein erstes und ein zweites ansteuerbares Gang-Ventil (RV 73, RV 51), welche jeweils dem ersten und zweiten Gangschieber (SS GS73, SS GS51) zugeordnet sind und mittels welchen jeweils ein erster und ein zweiter Gang-Steuerdruck an dem jeweils zugeordneten Gangschieber (SS GS73, SS GS51) einstellbar ist, wobei
- am ersten Gangschieber (SS GS73) der zweite Gang-Steuerdruck des zweiten Gangschiebers (SS GS51) dem ersten Gang-Steuerdruck entgegen wirkt und so der erste Gangschieber (SS GS73) durch den zweiten Steuerdruck verriegelbar ist,
aufweist.

12. Hydraulische Steuerung nach Anspruch 11,
**dadurch gekennzeichnet, dass**
- das Gangbetätigungssystem (62) so ausgeführt ist, dass die zweite Schalteinrichtung (19) dann ausgewählt ist, wenn der zweite Gang-Steuerdruck eine erste Druckschwelle überschreitet und
- der erste Gangschieber (SS GS73) des Gangbetätigungssystems (62) so ausgeführt ist, dass bei Überschreiten einer zweiten Druckschwelle durch den zweiten Gang-Steuerdruck eine Einstellung eines Betätigungsdrucks an der ersten Schalteinrichtung (18) mittels des ersten Gang-Steuerdrucks nicht mehr möglich ist.

13. Hydraulische Steuerung nach Anspruch 12,
**dadurch gekennzeichnet, dass**
der erste Gangschieber (SS GS73) des Gangbetätigungssystems (62) eine Feder (70) aufweist, die zusätzlich zum zweiten Gang-Steuerdruck dem ersten Gang-Steuerdruck entgegen wirkt.

14. Hydraulische Steuerung nach Anspruch 12 oder 13,
**dadurch gekennzeichnet, dass**
der erste Gangschieber (SS GS73) des Gangbetätigungssystems (62) so ausgeführt ist, dass eine erste Wirkfläche des ersten Gang-Steuerdrucks kleiner ist als eine zweite Wirkfläche des zweiten Gang-Steuerdrucks.

15. Hydraulische Steuerung nach einem der Ansprüche 11 bis 14,
**dadurch gekennzeichnet, dass**
der zweite Gangschieber (SS GS51) des Gangbetätigungssystems (62) durch den ersten Gang-Steuerdruck verriegelbar ist.

16. Hydraulische Steuerung nach Anspruch 15,
**dadurch gekennzeichnet, dass**
das Gangbetätigungssystem (62)
- eine dritte und vierte fluidbetätigte Schalteinrichtung (38, 39),
- einen dritten und vierten Gangschieber (SS GS42, SS GS6R),
- ein drittes und viertes ansteuerbares Ventil (RV 42, RV 6R), mittels welchen ein dritter und vierter Gang Steuerdruck einstellbar ist,
zur Betätigung eines zweiten Teilgetriebes (46) aufweist und der dritte Gangschieber (SS GS42) durch den vierten Gang-Steuerdruck und der vierte Gangschieber (SS GS6R) durch den dritten Gang-Steuerdruck verriegelbar sind.

17. Hydraulische Steuerung nach einem der Ansprüche 11 bis 16,
**dadurch gekennzeichnet, dass**
das Gangbetätigungssystem (62) eine Rastiervorrichtung (29) aufweist, welche eine Stellung der Schalteinrichtungen (18, 19, 38, 29) bei nicht vorhandenem Betätigungsdruck arretiert.

## Claims

1. Hydraulic control for an automatic gearbox, in particular a twin clutch gearbox, of a motor vehicle, comprising a lubricating/cooling system (80), a main pump (51) and a controllable auxiliary pump (56) which together ensure an oil supply for the hydraulic control (50),
**characterised in that**
the lubricating/cooling system (80) comprises a lubricating pressure valve (RS SmD) for adjusting a lubricating pressure in the lubricating/cooling system (80) and the auxiliary pump (56) is capable of delivering into a control passage (102) of the lubricating pressure spool valve (RS SmD) and thereby building up a lubricating/control pressure, the lubricating pressure valve (RS SmD) being designed such that the set lubricating pressure increases at an increase of the lubricating/control pressure, and a lower limit of the lubricating pressure is determined by a spring (81).

2. Hydraulic control according to claim 1,
**characterised in that**
the lubricating/cooling system (80) comprises a first selectable cooling valve (SS K), by means of which a connection between the control passage (102) of the lubricating pressure valve (RS SmD) and the auxiliary pump (56) can be established and broken.

3. Hydraulic control according to claim 1 or 2,
**characterised in that**
the lubricating/cooling system (80) is supplied via a supply passage (106) with an oil flow from the main pump (51) and additionally has an auxiliary oil passage (103) via which an additional oil flow can flow from the auxiliary pump (56) into the lubricating/cooling system (80), wherein the control passage (102) of the lubricating pressure valve (RS SmD) at least partially corresponds to the auxiliary oil passage (103).

4. Hydraulic control according to any of claims 1 to 3,
**characterised in that**
the lubricating/cooling system (80) comprises a first cooling passage (99) for cooling a starting clutch (12; 13) of the gearbox (10), and **in that** a second cooling passage (101) arranged parallel to the first cooling passage (99) can be opened and closed by means of the first selectable cooling valve (SS K).

5. Hydraulic control according to claim 4,
**characterised in that**
a return passage (105) via which an oil flow con flow from the lubricating/cooling system (80) to a suction side of a pump (51) of the hydraulic control (50) can be opened and closed by means of the first cooling valve (SS K).

6. Hydraulic control according to claim 4 or 5,
**characterised in that**
the auxiliary oil passage (103) via which an additional oil flow can flow into the lubricating/cooling system (80) can be opened and closed by means of the first cooling valve (SS K).

7. Hydraulic control according to claim 6,
**characterised in that**
the auxiliary oil passage (103) terminates into the first or second cooling passage (103, 99) for cooling the starting clutch (12, 13).

8. Hydraulic control according to any of claims 4 to 7,
**characterised in that**
the lubricating/cooling system (80) comprises a second selectable cooling valve (RS KK), by means of which an oil flow in the first cooling passage (99) can be adjusted.

9. Hydraulic control according to claim 8,
**characterised in that**
the second cooling valve (RS KK) is selected by a second selectable valve (RV 6R) with a second cooling/control pressure, the valve (RV 6R) having a main function within the hydraulic control (50) which differs from the setting of the second cooling/control pressure.

10. Hydraulic control according to any of claims 2 to 9,
**characterised in that**
the first cooling valve (SS K) is selected with a first cooling/control pressure by a first selectable valve (RV 42) having a main function within the hydraulic control (50) which differs from the setting of the first cooling/control pressure.

11. Hydraulic control according to any of claims 1 to 10,
**characterised by**
a gear actuating system (62) which comprises
- a first and a second fluid-actuated shifting device (18, 19), by means of which an idler gear (17a, 17b) can be coupled to a shaft (16), whereby a gear can be engaged in the variable-speed gearbox,
- a first and a second gear shift valve (SS GS73, SS GS51) assigned to the first and second shifting device (18, 19), by means of which an actuating pressure can be applied to the associated shifting device (18, 19) as a function of a gear control pressure,
- a first and a second selectable gear valve (RV 73, RV 51) assigned to the first and second gear shift valve (SS GS73, SS GS51), by means of which a first and a second gear control pressure at the associated gear shift valve (SS GS73, SS GS51) is adjustable, wherein
- at the first gear shift valve (SS GS73) the second gear control pressure of the second gear shift valve (SS GS51) counteracts the first gear control pressure, so that the first gear shift valve (SS GS73) can be locked by the second control pressure.

12. Hydraulic control according to claim 11,
**characterised in that**
- the gear actuating system (62) is designed such that the second shifting device (19) is selected if the second gear control pressure exceeds a first pressure threshold, and
- the first gear shift valve (SS GS73) of the gear actuating system (62) is designed such that, if the second gear control pressure exceeds a second pressure threshold, an actuating pressure to the first shifting device (18) can no longer be adjusted by means of the first gear control pressure.

13. Hydraulic control according to claim 12,
**characterised in that**
the first gear shift valve (SS GS73) of the gear actuating system (62) comprises a spring (70) which counteracts the first gear control pressure in addition to the second gear control pressure.

14. Hydraulic control according to claim 12 or 13,
**characterised in that**
the first gear shift valve (SS GS73) of the gear actuating system (62) is designed such that a first active area of the first gear control pressure is smaller than a second active area of the second gear control pressure.

15. Hydraulic control according to any of claims 11 to 14,
**characterised in that**
the second gear shift valve (SS GS51) of the gear actuating system (62) can be locked by the first gear control pressure.

16. Hydraulic control according to claim 15,
**characterised in that**
the gear actuating system (62) comprises
- a third and a fourth fluid-actuated shifting device (38, 39),
- a third and a fourth gear shift valve (SS GS 42, SS GS6R),
- a third and a fourth selectable valve (RV 42, RV 6R) by means of which a third and a fourth gear control pressure can be adjusted,
for the actuation of a second part-gearbox (46), and in that the third gear shift valve (SS GS 42) can be locked by the fourth gear control pressure and the fourth gear shift valve (SS GS6R) can be locked by the third gear control pressure.

17. Hydraulic control according to any of claims 11 to 16,
**characterised in that**
the gear actuating system (62) comprises a latching device (29) which locks a position of the gear shifting devices (18, 19, 38, 29) if no actuating pressure is present.

## Revendications

1. Commande hydraulique destinée à une boîte de vitesses automatisée, en particulier à une boîte de vitesses à double embrayage d'un véhicule automobile ayant un système (80) de refroidissement et de lubrification et une pompe principale (51) et une pompe auxiliaire (56) pouvant être commandée, qui assurent ensemble une alimentation en huile de la commande hydraulique (50), **caractérisée en ce que** le système (80) de refroidissement et de lubrification présente une vanne de pression de lubrification (RS SmD) destinée à régler une pression de lubrification dans le système (80) de refroidissement et de lubrification et la pompe auxiliaire (56) peut refouler dans un canal de commande (102) d'une vanne de pression de lubrification (RS SmD) et établir ainsi une pression de commande de lubrification, la vanne de pression de lubrification (RS SmD) étant conçue de manière que la pression de lubrification réglée augmente conjointement avec la pression de commande de lubrification croissante et une limite inférieure de la pression de lubrification étant déterminée par un ressort (81).

2. Commande hydraulique selon la revendication 1, **caractérisée en ce que** le système (80) de refroidissement et de lubrification présente une première vanne de refroidissement (SS K) pouvant être commandée qui permet d'établir et interrompre une liaison entre le canal de commande (102) de la vanne de pression de lubrification (RS SmD) et la pompe auxiliaire (56).

3. Commande hydraulique selon la revendication 1 ou 2, **caractérisée en ce que** le système (80) de refroidissement et de lubrification est alimenté en un flux volumique d'huile provenant de la pompe principale (51) par l'intermédiaire d'un canal d'alimentation (106) et présente en outre un canal auxiliaire d'huile (103), par l'intermédiaire duquel un flux volumique auxiliaire d'huile provenant de la pompe auxiliaire (56) peut s'écouler dans le système (80) de refroidissement et de lubrification, le canal de commande (102) de la vanne de pression de lubrification (RS SmD) correspondant au moins partiellement au canal auxiliaire d'huile.

4. Commande hydraulique selon l'une quelconque des revendications 1 à 3, **caractérisée en ce que** le système (80) de refroidissement et de lubrification présente un premier canal de refroidissement (99) d'un embrayage de démarrage (12, 13) de la boîte de vitesse (10) et qui peut s'ouvrir et se fermer au moyen de la première vanne de refroidissement (SS K) pouvant être commandée d'un second canal de refroidissement (101), qui est parallèle avec le premier canal de refroidissement (99).

5. Commande hydraulique selon la revendication 4, **caractérisée en ce qu'**au moyen de la première vanne de refroidissement (SS K) un canal de refoulement (105) par lequel un flux volumique d'huile provenant du système (80) de refroidissement et de lubrification dans la direction d'un côté d'aspiration d'une pompe (51) de la commande hydraulique (50) peut s'écouler, peut s'ouvrir et se fermer.

6. Commande hydraulique selon la revendication 4 ou 5, **caractérisée en ce qu'**au moyen de la première vanne de refroidissement (SS K) le canal auxiliaire d'huile (103) par lequel un flux volumique d'huile auxiliaire peut s'écouler dans le système (80) de refroidissement et de lubrification, peut s'ouvrir et se fermer.

7. Commande hydraulique selon la revendication 6, **caractérisée en ce que** le canal auxiliaire (103) débouche dans le premier et le second canal de refroidissement (103, 99) destinés au refroidissement de l'embrayage de démarrage (12, 13).

8. Commande hydraulique selon l'une quelconque des revendications 4 à 7, **caractérisée en ce que** le système (80) de refroidissement et de lubrification présente une seconde vanne de refroidissement (RS KK) pouvant être commandée, au moyen de laquelle un flux volumique d'huile peut être réglé dans le premier canal de refroidissement (99).

9. Commande hydraulique selon la revendication 8, **caractérisée en ce que** la seconde vanne de refroidissement (RS KK) est commandée par une seconde valve (RV 6R) pouvant être commandée conjointement avec une seconde pression de commande de refroidissement, laquelle présente une fonction principale s'écartant du réglage de la seconde pression de commande de refroidissement à l'intérieur de la commande hydraulique (50).

10. Commande hydraulique selon l'une quelconque des revendications 2 à 9, **caractérisée en ce que** la première vanne de refroidissement (RS K) est commandée par un première valve (RV 6R) pouvant être commandée conjointement avec une première pression de commande de refroidissement, laquelle présente une fonction principale s'écartant du réglage de la première pression de commande de refroidissement à l'intérieur de la commande hydraulique (50).

11. Commande hydraulique selon l'une quelconque des revendications 1 à 10, **caractérisée**
- en ce qu'un premier et un second dispositif de couplage actionné (18, 19), au moyen desquels à chaque fois une roue folle (17a, 17b) peut être couplée à l'arbre (16) et ainsi un rapport peut être enclenché dans la boîte à pignons interchangeables,
- en ce qu'une première et une seconde vanne de commande de vitesse (SS GS73) qui sont chacune associées au premier et au second dispositif de couplage (18,19) et au moyen desquelles en fonction d'une pression de commande de rapport une pression d'actionnement peut être appliquée sur chacun des dispositifs de couplage (18, 19) associés,
- en ce qu'une première et une seconde soupape de commande de rapport (RV 73, RV 51) pilotables, qui sont à chaque fois associées à la première et à la seconde vanne de commande de vitesse (SS GS73, SS GS51) et au moyen desquelles à chaque fois une première et une seconde pression de commande de rapport peut être réglée sur chaque vanne de commande de rapport associée (SS GS73, SSGS51),
- en ce que sur la première vanne de commande de vitesse (SS GS73) la seconde pression de commande de rapport de la seconde vanne de commande de rapport (SS GS51) agit à l'encontre de la première pression de commande de rapport et ainsi la première vanne de commande de rapport (SS GS73) peut être verrouillée par la seconde pression de commande.

12. Commande hydraulique selon la revendication 11, **caractérisée en ce que**
- le système d'actionnement de vitesses (62) est conçu de telle sorte que le second dispositif de changement de vitesse (19) soit alors sélectionné lorsque la seconde pression de commande de vitesse dépasse un premier seuil de pression et
- la première vanne de commande de rapport (SS GS73) du système d'actionnement de vitesses (62) est conçu de telle sorte qu'en cas de dépassement d'un second seuil de pression par la seconde pression de commande de vitesse un réglage d'une pression d'actionnement n'est plus possible sur le premier dispositif de changement de vitesses (18) au moyen de la première pression de commande de vitesse.

13. Commande hydraulique selon la revendication 12, **caractérisé en ce que** la première vanne de commande de vitesse (SS GS73) du système d'actionnement de vitesses (62) présente un ressort (70) qui en plus de la seconde pression de commande de vitesse agit à l'encontre de la première pression de commande de vitesse.

14. Commande hydraulique selon la revendication 12 ou la revendication 13, **caractérisé en ce que** la première vanne de commande de vitesse (SS GS73) du système d'actionnement de vitesse (62) est conçue de telle sorte qu'une première surface active de la première pression de commande de vitesse est inférieure à une seconde surface active de la seconde pression de commande de vitesse.

15. Commande hydraulique selon l'une quelconque des revendications 11 à 14, **caractérisé en ce que** la seconde vanne de commande de vitesse (SS GS51) du système d'actionnement de vitesses (62) peut être verrouillée par la première pression de commande de vitesse.

16. Commande hydraulique selon la revendication 15, **caractérisée en ce que** le système d'actionnement de vitesses (62) présente
- un troisième et quatrième dispositif de changement de vitesse (38, 39) actionnés par un fluide,
- une troisième et une quatrième vanne de commande de vitesse (SS GS42, SS GS6R),
- une troisième et quatrième vanne pilotable (RV 42, RV 6R) au moyen desquelles une troisième et quatrième pression de commande de vitesse peuvent être réglées pour actionner une seconde demi-boîte (46) et la troisième vanne de commande de vitesse (SS GS42) peut être verrouillée par la quatrième pression de commande de vitesse et la quatrième vanne de commande de vitesse (SS GS6R) peut être verrouillée par la troisième pression de commande de vitesse.

17. Commande hydraulique selon l'une quelconque des revendications 11 à 16, **caractérisé en ce que** le système d'actionnement de vitesses (62) présente un dispositif de verrouillage (29) qui bloque une position des dispositifs de changement de vitesse (18, 19, 38, 29) lorsqu'il n'y a pas de pression d'actionnement.
